# FASCICULE DE BREVET EUROPEEN

(11) **EP 2 419 583 B1**
(45) Date de publication et mention de la délivrance du brevet: **01.04.2015**
(21) Numéro de dépôt: 10717675.2
(22) Date de dépôt: 30.03.2010
(51) Int. Cl.: B65G 63/04, E04H 5/02, B65G 1/00

(54) **INSTALLATION ET PROCEDE DE STOCKAGE DE MATIERES DANGEREUSES CONDITIONNEES EN CONTAINERS**
EINRICHTUNG UND VERFAHREN ZUR LAGERUNG VON IN BEHÄLTERN VERPACKTEN GEFÄHRLICHEN MATERIALIEN
FACILITY AND METHOD FOR STORING DANGEROUS MATERIALS PACKAGED INTO CONTAINERS

(30) Priorité: 14.04.2009 FR 0952428
(43) Date de publication de la demande: 22.02.2012
(73) Titulaire: Suzanne, Jean-Marc, 13620 Carry Le Rouet (FR)
(72) Inventeur: Suzanne, Jean-Marc, 13620 Carry Le Rouet (FR)
(74) Mandataire: Domange, Maxime
(86) Numéro de dépôt international: PCT/FR2010/050582
(87) Numéro de publication internationale: WO 2010/119205

(56) Documents cités:
- DE-A1- 10 040 699
- FR-A1- 2 653 812

## Description

La présente invention concerne une installation et procédé de stockage de matières dangereuses conditionnées en containers.

Actuellement, les matières dangereuses conditionnées en containers ne sont pas valablement stockées. Le problème se pose à la fois au niveau des sites de production et/ou de consommation de matières dangereuses qui disposent très rarement de sites conçus et autorisés pour le stockage de containers de matières dangereuses à proximité, mais aussi en particulier pour le stationnement des containers de matières dangereuses en transit, notamment sur les plateformes logistiques multimodales où se fait l'échange de modes de transport par voie ferrée, route, fluvial et sur les ports, car les matières dangereuses ne sont pas autorisées à y stationner plus de 48 heures, respectivement 72 heures en zone portuaire.

Or, l'incertitude des horaires d'arrivée et de départ des navires dans les ports, les aléas liés aux acheminements ferroviaires ou fluviaux, rendent très difficile la gestion des transits de matières dangereuses que ce soit au niveau des plateformes logistiques multimodales ou des zones portuaires

Il est ainsi connu, notamment de la demande de brevet FR 2653 812 A1, de prévoir un entrepôt modulaire pour produits chimiques dangereux constitué par la combinaison de cellules modulaires juxtaposables, isolées thermiquement, étanches aux liquides et au gaz, résistant au feu et à l'explosion, réalisées en éléments préfabriqués démontables ou en maçonnerie traditionnelle, sans charpente métallique.

Ce document divulgue les caractéristiques suivantes de la revendication 1: une installation de stockage de matières dangereuses conditionnées en containers comprenant : - des cellules s'étendant selon une direction longitudinale, de préférence au moins trois cellules disposées côte à côte dans la direction longitudinale et délimitées par des murs coupe-feu verticaux contenant des dits containers, contenant des matières dangereuses de catégories différentes, et - chaque cellule étant entourée par une enceinte comprenant des murs coupe-feu verticaux, s'étendant au-dessus du sol.

Cependant, de tels entrepôts modulaires, destinés à reposer dans des hangars ou à être recouvert d'une couche de terre, présentent l'inconvénient d'être inadaptés pour le stockage de certaines matières dangereuses, dans le sens où ils ne répondent pas à toutes les mesures de sécurité en vigueur pour le stockage de ces matières dangereuses.

L'installation de stockage de matières dangereuses en containers selon l'invention, apporte une solution à ces problématiques de stockage et de stationnement de façon la plus sécurisée possible.

En particulier, l'installation doit pouvoir éviter ou résoudre les problèmes suivants :
- éviter tout contact direct d'une source d'ignition avec les matières dangereuses stockées
- éviter le contact entre deux matières dangereuses non compatibles entre elles,
- éviter la pollution de l'environnement suite à un épandage dans l'installation, et
- prévenir les départs d'incendie et dans les cas de sinistres, d'incendie ou d'explosion, empêcher la propagation du sinistre en dehors du périmètre foncier de l'installation.

Pour ce faire, la présente invention fournit une installation de stockage semi enterrée de matières dangereuses conditionnées en containers, comprenant :
- au moins une cellule s'étendant selon une direction longitudinale XX', de préférence au moins trois cellules enterrées disposées côte à côte dans la direction longitudinale XX', et délimitée par des murs coupe-feu verticaux enterrés formant une fosse contenant des dits containers contenant des matières dangereuses de catégories différentes, et
- la ou chaque cellule étant entourée par une enceinte comprenant des murs coupe-feu verticaux, s'étendant au-dessus du sol, et
- au moins une zone de dépose et de réception des containers, tel qu'une chaussée de circulation de camions et/ou une zone de manutention de containers en provenance ou à destination d'une ligne de transport ferroviaire, la ou chaque zone de dépose et de réception s'étendant dans la dite direction longitudinale XX' à l'extérieur d'un mur longitudinal d'enceinte sur au moins toute la longueur de la ou des cellules, et

- une piste de dépose en forme de couloir à l'intérieur de chaque dite enceinte s'étendant dans la direction longitudinale XX' entre la ou chaque dite cellule enterrée et ledit mur longitudinal d'enceinte, et
- un portique de manutention motorisée de containers apte à déplacer un dit container suspendu, notamment par l'intermédiaire d'un cadre de préhension, équipé de quatre verrous tournant et/ou de quatre jambes ou pinces de préhension, la ou chaque zone de dépose et de réception et une dite cellule, horizontalement dans une direction transversale YY', à une hauteur supérieure à celle des dits murs d'enceinte, et verticalement jusqu'au fond de chaque dite cellule, ledit portique étant apte à être déplacé dans la direction longitudinale XX' au-dessus desdits murs d'enceinte.

Une installation de stockage selon l'invention a principalement pour finalité de stocker des matières dangereuses conditionnées en containers de type UTI d'une longueur variant de 3 à 15 m (plus précisément de 10 à 45 pieds), de préférence de 6 à 12 m (plus précisément de 20 à 40 pieds), et autorisées à circuler sur la route et le train à l'exception donc des matières dangereuses de classe 1 (matières explosives), de classe 6.2 (matières infectieuses) et de classe 7 (matières radioactives).

On entend ici par « mur coupe-feu » un écran en béton empêchant la propagation d'un incendie de part et d'autre du mur ce pendant une durée minimale de 2 heures.

On entend ici par « zone de dépose et de réception » une zone sur laquelle on peut déposer ou réceptionner des containers, soit directement sur cette zone soit indirectement sur un élément de transport (comme par exemple un camion) circulant sur cette zone de dépose ou de réception.

En pratique, la hauteur des murs longitudinaux d'enceinte sera égale à la hauteur standardisée d'un camion porte containers, soit au moins de 4 m au-dessus de la chaussée de circulation, et la hauteur des murs transversaux d'enceinte sera égale au moins à la hauteur des murs longitudinaux d'enceinte additionnée de la hauteur d'un container dit « High cube », soit d'au moins 7 m.

Dans un mode préféré de réalisation, l'installation comprend en outre une toiture. Cette toiture comporte avantageusement une couverture qui comprend ou coopère avec des moyens empêchant le passage à travers la toiture d'objets de taille supérieure à 0,1 m², de préférence des objets de taille supérieure à 100 cm² et qui comporte ou coopère avec des moyens d'évacuation d'air à travers la toiture en cas de surpression en sous-face de la toiture, ladite toiture étant supportée par des poteaux, de préférence extérieurs à l'enceinte, ladite toiture couvrant au moins ladite enceinte et ledit portique, et de préférence la ou chaque zone de dépose et de réception, et l'espace entre l'extrémité supérieure des murs d'enceinte et ladite toiture ne faisant pas obstacle à la circulation d'air entre l'intérieur et l'extérieur de l'installation dans ledit espace.

Une telle toiture est particulièrement avantageuse pour protéger l'installation des intempéries et des objets susceptibles de détériorer les containers, tout en offrant une circulation de l'air indispensable lors du stockage de matières dangereuses.

Dans une réalisation particulière, ladite toiture comprend une couverture fermée étanche comprenant des zones, dénommée zone de surpression aptes à s'ouvrir en cas de surpression en sous-face de la toiture, ladite toiture comprenant en outre des filets, grillages ou treillis métalliques de toiture en sous-face de la toiture et par-dessus la toiture et/ou par-dessus la toiture, au moins au regard des dites zones de surpression, de préférence desdits filets, grillages ou treillis métalliques en sous-face de la toiture recouvrant toute ladite enceinte et des deuxièmes dits filets, grillages ou treillis métalliques au-dessus de ladite toiture recouvrant toute ladite toiture.

Lesdits filets, grillages ou treillis métalliques de toiture au-dessus et en sous-face de la toiture sont destinés à éviter la projection vers l'extérieur de morceaux de containers provenant de ladite enceinte, ainsi que l'expulsion éventuelle d'un élément de toiture et sa retombée à l'extérieur de ladite enceinte en ce qui concerne les filets, grillages ou treillis métalliques par-dessus la toiture et le cas échéant à l'intérieur de ladite enceinte en ce qui concerne les filets, grillages ou treillis en dessous de ladite toiture. Les filets, grillages ou treillis métalliques de dessous la toiture protègent également la toiture de projections de morceaux de containers ou divers objets provenant de l'enceinte, en cas d'explosion à l'intérieur de l'enceinte.

Plus particulièrement encore, ladite toiture comporte une charpente en poutres métalliques, de préférence traitée coupe feu, de préférence encore sur laquelle est appliquée par flocage un revêtement coupe feu « 2 heures » telle qu'une laine minérale résistant au feu, ladite charpente supportant une couverture fermée constituée de panneaux d'acier et/ou en matériau composite résistant au feu, de préférence des panneaux incorporant un matériau résistant au feu, telle que de la laine minérale, notamment de la laine de roche confinée entre deux tôles d'acier, certains des dits panneaux, dénommés « panneaux de surpression » étant aptes , à s'ouvrir ou à se rompre à partir d'une valeur de surpression donnée entre la sous-face de la toiture et l'extérieur au-dessus de la toiture, notamment une valeur seuil de surpression de 5 à 50 millibar, de préférence de 10 à 25 millibar, de préférence les autres dits panneaux de la couverture étant aptes à se désolidariser individuellement de la charpente de la toiture sur laquelle ils sont montés, mais à partir d'une valeur de surpression supérieure à ladite valeur seuil de surpression d'ouverture ou de rupture des dits panneaux de surpression, notamment en cas d'explosion à l'intérieur de l'installation . Ceci permet d'éviter un endommagement de la charpente dans le cas où l'ouverture et/ou la rupture des panneaux de surpression ne serait pas suffisante à et égard.

Plus particulièrement, les panneaux de surpression peuvent être aptes à s'ouvrir par pivotement autour de charnières ou peuvent être montés sur bâtis fixes et aptes à se rompre dans les deux cas à partir d'une dite valeur seuil de surpression donnée. Cette couverture de panneaux d'acier et/ou de matériaux composites est relativement plus légère qu'une toiture conventionnelle en béton et/ou en tuiles. Lesdits panneaux en acier ou en matériaux composites sont aptes à se détacher individuellement de la charpente sans que toute la charpente ne soit projetée, en cas où l'ouverture et/ou la rupture des dits panneaux de surpression n'auraient pas permis d'évacuer suffisamment d'air suffisamment rapidement pour préserver la toiture. La toiture peut comprendre ces deux types de panneaux de surpression.

Dans une variante de réalisation, la couverture légère, étanche peut être supprimée, voire également la charpente, et ne conserver que desdits filets, grillages ou treillis métalliques supportés par lesdits poteaux pour éviter la projection vers l'extérieur de morceaux de containers ou autres objets provenant de l'enceinte en cas d'explosion, tout en permettant le passage libre de l'air au travers de la toiture.

Les différentes caractéristiques de l'installation contribuent à fournir une installation sécurisée de stockage de matières dangereuses.

Plus particulièrement, les effets techniques suivants sont obtenus :
- Le caractère enterré des cellules permet d'éviter qu'une explosion intervenant dans une cellule se propage à l'extérieur de l'installation.
- Les murs coupe-feu d'enceinte empêchent qu'une explosion ou incendie à l'extérieur de l'installation ne se propage dans une cellule, et contribuent aussi à la protection en sens inverse en empêchant la propagation d'un incendie ou explosion liés aux matières dangereuses stockées, depuis une cellule vers l'extérieur de l'installation.

- La hauteur de 4 m des murs d'enceinte correspond à une hauteur normalisée des camions porte containers portant un container et respectent les hauteurs des différents ouvrages d'art tels que pont et tunnels sur les voies et routes publiques.
- Les murs transversaux, y compris aux extrémités de chaque cellule constituent une séparation entre cellules d'une part et entre l'extérieur et les cellules situées aux extrémités du stockage. Le fait, qu'ils soient de plus grande hauteur permet de sécuriser plus encore l'installation en empêchant toute propagation d'un incendie ou explosion d'une cellule à l'autre. Ces murs transversaux de séparation de plus grande hauteur isolent donc les cellules les unes par rapport aux autres en cas de sinistre, notamment sinistre se propageant à un container suspendu en hauteur en cours de manutention, c'est-à-dire au-dessus et à une hauteur supérieure à celle des murs de séparation longitudinaux.
- La structure et l'agencement des zones de dépôt et portiques de manutention contribuent à la sécurité de l'installation en minimisant les durées de manutention des containers entre le camion de livraison et une cellule. En effet, un camion chargé et un portique à vide viennent se positionner à une place prédéterminée dans la direction longitudinale du couloir de sorte qu'il ne reste plus qu'une distance réduite dans la direction transversale à parcourir par le portique sur une portée réduite.
- Le mur longitudinal d'enceinte entre la chaussée de circulation et la zone de dépose évite que le camion ne pénètre à l'intérieur de l'enceinte de stockage.
- La piste de dépose permet de stationner un container lors du déchargement depuis un camion avant sa saisie par le portique, mais aussi lorsque l'on retire d'une cellule un container stocké dessous les containers d'une même colonne (auquel cas on dépose momentanément dans la zone de dépose les containers situés dessus celui que l'on veut récupérer).
- Le fait que la piste de dépose soit à l'intérieur de ladite enceinte, limite le trajet du portique d'une part et d'autre part, constitue une sécurité supplémentaire en cas d'explosion ou incendie au niveau du camion sur la chaussée de circulation et vice-versa protège le camion en cas d'incendie à l'intérieur de l'enceinte.
- L'espace ouvert entre la toiture et les extrémités supérieures des murs d'enceinte qui favorisent une bonne ventilation à l'intérieur de l'installation de stockage, combiné avec le choix d'une toiture étanche mais légère et facilement déformable en cas de surpression d'air dessous la toiture limitent la destruction de l'ouvrage en cas de surpression provoquée par une explosion. De même, le fait que les murs des cellules soient enterrés, constitue également une sécurité contre la destruction de l'ouvrage en cas de sinistre impliquant des déflagrations importantes.

Plus particulièrement, dans l'installation de stockage selon l'invention :
- chaque cellule ouverte sur le dessus est délimitée latéralement par quatre murs coupe-feu verticaux enterrés reposant sur un plancher, de préférence un plancher à fond légèrement incliné, mais équipé de supports permettant le stockage des containers à l'horizontale, les quatre murs verticaux comprenant deux murs longitudinaux de cellule s'étendant parallèlement dans une direction longitudinale XX' et deux murs transversaux de cellule s'étendant parallèlement dans une direction transversale YY' perpendiculaire à la direction longitudinale YY' entre les deux murs longitudinaux de cellule, et
- chaque dite enceinte comprend quatre murs coupe-feu verticaux, comprenant deux murs longitudinaux d'enceinte s'étendant sur une hauteur d'au moins 4 m au-dessus du sol parallèlement dans une direction longitudinale XX' et deux murs transversaux d'enceinte s'étendant parallèlement dans une direction transversale YY' perpendiculaire à la direction longitudinale XX' entre les deux murs longitudinaux d'enceinte, les deux murs transversaux d'enceinte étant de plus grande hauteur que les murs longitudinaux d'enceinte de préférence d'au moins 7 m de hauteur, et
- la ou chaque zone de dépose et de réception s'étend dans la dite direction longitudinale XX' à l'extérieur d'un premier ou des premiers murs longitudinaux d'enceinte sur au moins toute la longueur de la ou des cellules, et
- ladite piste de dépose en forme de couloir à l'intérieur de chaque dite enceinte s'étendant dans la direction longitudinale XX' entre chaque dite cellule enterrée et ledit mur longitudinal d'enceinte, et
- ledit portique de manutention motorisé de containers apte à déplacer un dit container suspendu audit premier chariot, horizontalement le long de ladite poutre dans ladite direction transversale YY' à une hauteur supérieure à celle des dits murs d'enceinte longitudinaux, de préférence à une hauteur inférieure à celle des dits murs d'enceinte transversaux et verticalement jusqu'au fond d'une dite cellule sur un dit plancher, et ladite poutre coopérant avec des seconds moyens tels sur des rails ou glissière de guidage longitudinaux et des seconds chariots aptes à déplacer la dite poutre le long des dits seconds moyens de guidage au-dessus des dits des murs d'enceintes transversaux dans la direction longitudinale XX'.

Dans ce cas particulier, la toiture est avantageusement située à une hauteur H1 au dessus de l'extrémité supérieure des dits murs transversaux d'enceinte, H1 devant permettre le déplacement longitudinal dudit portique à vide au dessus des dits murs transversaux et le déplacement transversal d'un dit container suspendu au dit portique au-dessus des dits murs longitudinaux d'enceinte, mais empêchant le déplacement longitudinal d'un dit container suspendu au dit portique au-dessus des dits murs transversaux.

Plus particulièrement encore, chaque dite cellule comporte plusieurs dites cellules successives à direction longitudinale XX' présentant une même largeur dans ladite direction transversale YY', et deux cellules successives adjacentes présentent un dit mur transversal d'enceinte de plus grande hauteur en commun, et lesdits murs longitudinaux d'enceinte des différentes cellules forment de chaque côté un même mur longitudinal d'enceinte continu sur toute la longueur de l'installation, le deuxième mur longitudinal d'enceinte situé du côté opposé au côté où se trouve ladite piste de dépose, s'étend dans la continuité en hauteur des deuxièmes murs longitudinaux enterrés des cellules, et forment un même mur longitudinal d'enceinte avec celui-ci, et lesdits murs transversaux d'enceinte s'étendent dans la continuité en hauteur desdits murs transversaux de cellules et forment un même mur avec ceux-ci.

On comprend que deux cellules successives adjacentes présentent donc aussi un même mur transversal de cellules en commun.

Dans un mode préféré de réalisation, chaque dite cellule comprend des containers de type parallélépipédique, dénommés unités de transport intermodal (UTI), de dimension standard, lesdits containers étant posés en colonnes de trois containers superposés, lesdites colonnes étant alignées en rangées de colonnes dans la direction longitudinale, de préférence chaque rangée dans la direction longitudinale XX' comprenant 5 à 25 dites colonnes par rangée, de préférence 10 à 16 colonnes de containers de 20 pieds de longueur (6,058 m) par rangée , et chaque cellule comprenant 3 à 7 rangées, de préférence 5 rangées, de dites colonnes disposées parallèlement dans la direction transversale YY', en aménageant des travées libres entre chaque dite rangée.

Les unités de transport intermodal (UTI) sont soit des caisses pleines à paroi métallique (en particulier les containers norme ISO de type dit « Dry » ou les « caisses mobiles gerbables »), soit des cadres parallélépipédiques supportant une certaine citerne cylindrique à paroi métallique, soit encore des caisses mobiles non gerbables dont les dimensions externes maximales sont : longueur 13,6 mètres, largeur 2,55 mètres. Le nombre de trois containers, notamment trois unités de transport intermodal, dans chaque colonne est compatible avec les propriétés de résistance mécanique desdits containers, notamment UTI et en conséquence avec la charge supportée par l'unité de transport intermodal la plus basse de la colonne. Dans le cas de caisses mobiles non gerbables certaines zones du stockage sont équipées de bâtis en acier permettant de les superposer sans qu'elles n'aient à supporter le poids de celles placées au dessus. Le nombre maximal de sept rangées et optimal de cinq rangées est compatible avec une portée raisonnable du portique de manutention dans la direction transversale YY' au regard des propriétés de résistance mécanique d'un tel dispositif. Le nombre optimal de 14 à 16 colonnes de containers par rangée permet de stocker 210 à 240 containers (19 à 24 m³ pour les containers citernes 20 pieds, 33 m³ pour les containers 20 pieds norme ISO) par cellule, ce qui représente une surface de stockage maximale par cellule de l'ordre de 2500 m², étant entendu que la surface limite réglementaire de stockage généralement pratiquée dans une cellule de stockage est de 4000 m²

Plus particulièrement, au moins une dite cellule, de préférence chaque cellule comporte des moyens de canalisations tels que des pentes et des caniveaux, aptes à diriger des effluents tels que des égouttures ou déchets provenant des dits containers depuis le plancher de fond de la cellule vers une grande cuve de rétention de volume au moins égal à celui d'un container, la dite grande cuve de rétention étant déportée à l'extérieur de la cellule, de préférence enterrée et de préférence, disposant d'un dispositif automatique d'obturation.

Cette grande cuvette de rétention déportée à l'extérieur de la cellule évite la création d'une nappe de matière dangereuse inflammable sous les containers à l'intérieur de la cellule. D'autre part, sa disposition à l'extérieur de la cellule constitue une sécurité supplémentaire.

De préférence encore, dans une installation selon l'invention, le fond de chaque cellule est partitionné par des murets support, de préférence des murets longitudinaux parallèles entre eux, s'élevant au-dessus d'un plancher, chaque container en fond de cellule ou dite colonne de containers reposant sur deux dits murets support délimitant des cuvettes de rétention dessous le dit container ou colonne de containers, et ledit plancher est légèrement incliné, de préférence incliné à double pente convergeant vers le milieu de la longueur de la cellule où un caniveau transversal en pente dirige les effluents depuis les dites cuvettes de rétention vers une grande cuve de rétention à l'extérieur de la cellule, de préférence enterrée, de préférence encore disposée à mi-longueur de la cellule.

De préférence, au moins une dite cellule comporte au moins une colonne de containers dénommés « container d'effluent », de préférence deux colonnes de trois containers destinés à recevoir des effluents, lesdits effluents s'étant initialement écoulés depuis des containers pleins de matière dangereuse vers le plancher fond de la cellule puis de préférence vers une grande cuve de rétention déportée à l'extérieur de la cellule, de préférence enterrée.

Ces containers à effluents sont manipulables par le portique de manutention. Le liquide pompé dans un container d'effluent peut être prélevé par un opérateur et analysé. Et, si l'analyse décèle une quelconque pollution, les effluents collectés sont expédiés en centre de traitement pour destruction.

En variante, la ou les colonnes de « containers d'effluent » peuvent faire l'objet d'un cantonnement spécifique par des murs transversaux coupe feu afin de les rendre totalement extérieurs à la cellule de stockage proprement dite, voire être positionnées à l'extérieur dans le prolongement longitudinal de ladite enceinte de stockage dans une zone de confinement spécifique afin de pouvoir être opérées par le portique.

Plus particulièrement, les dits containers d'effluents récupèrent les effluent retenus dans la dite grande cuve de rétention véhiculés dans des canalisations entre la dite grande cuve de rétention et les dits containers d'effluents à l'aide de moyens de pompage installés à l'extérieur de la cellule, de préférence le remplissage du ou des dits containers d'effluents se déclenchant automatiquement lorsque la dite grande cuve de rétention atteint un certain niveau de remplissage.

Les moyens de pompage installés à l'extérieur de l'enceinte des murs coupe-feu sont aussi une sécurité supplémentaire, ainsi que le cantonnement des « containers d'effluents » par des murs transversaux de plus grande hauteur que les murs longitudinaux d'enceinte de préférence d'au moins 7 m de hauteur.

Avantageusement encore, ladite cellule comporte au moins un escalier encloisonné enterré à l'extérieur de la cellule permettant d'accéder à la hauteur de chaque container d'effluent d'une colonne de containers d'effluent, de préférence par l'intermédiaire de passerelles de visite des containers d'effluents.

La disposition dudit escalier de visite à l'extérieur du mur de séparation de cellules constitue une sécurité pour l'opérateur, lui permettant d'inspecter le contenu d'un container pour effectuer notamment un prélèvement ou venir le déconnecter le cas échéant.

De préférence, les colonnes de containers d'effluents sont disposées à mi-longueur de la cellule et ladite grande cuve de rétention et ledit escalier sont disposés l'un dessous l'autre également à mi-longueur de la cellule pour minimiser les distances de transport des effluents.

De préférence, au moins une cellule est partitionnée par des cloisons transversales internes de même hauteur que lesdits murs longitudinaux de cellules, de façon à délimiter des sous-cellules isolées les unes des autres à l'intérieur de ladite cellule.

Ces cloisonnements internes sont particulièrement utiles pour certaines catégories de matières dangereuses explicitées ci-après, qui doivent être davantage isolées. De préférence, ces cloisons transversales internes sont également de qualité coupe-feu.

Selon une autre caractéristique avantageuse de la présente invention, ladite installation comprend des troisièmes grillages ou filets extérieurs de protection métalliques anti projection s'étendant verticalement depuis les bords de la dite toiture jusqu'au dessous de l'extrémité supérieure de dits murs d'enceinte longitudinaux et dits murs d'enceinte transversaux et de préférence ne s'étendant pas en dessous de 2 m à partir du niveau du sol de la ou de chaque zone de dépose et de réception, et notamment de la chaussée de circulation.

Ces grillages ou filets de protection anti-projection sont destinés à empêcher que des projectiles résultant d'une explosion à l'intérieur de l'enceinte de stockage ne sortent de l'installation, de préférence les mailles de filets de protection sont inférieures à 100 cm². Avantageusement, tout en laissant passer l'air en cas de souffle ou déflagration, ces filets ou grillages anti-projection seront fixés sur les poteaux supportant la toiture.

Dans un mode de réalisation préféré, des filets de protection additionnels déployables sur commande peuvent être déployés à partir de la toiture à l'extrémité supérieure desdits murs transversaux de cellules, une desdites cellules d'une même installation. Ces filets ou grillages secondaires déployables contribuent à prévenir la propagation d'un sinistre entre cellules adjacentes. Ces filets secondaires sont à mailles plus fines que les filets extérieurs de protection. Ces filets secondaires sont fixés en sous-face de la toiture au droit de chaque mur coupe-feu transversal séparant les cellules et sont lestés de manière à tomber le long des murs coupe-feu. Leur largage peut se déclencher automatiquement en cas de sinistre ou manuellement.

Dans un mode de réalisation avantageux, certaines cellules peuvent comporter en outre des cloisons transversales additionnelles partitionnant ladite cellule transversalement, ces cloisons transversales de partitionnement de chaque cellule pouvant être combinées à des filets additionnels fixés à la surface de toiture au droit de chaque cloison transversale à l'extérieur de ladite cellule.

Selon une autre caractéristique avantageuse de la présente invention, l'installation de stockage comprend en outre :
- des moyens de détection, notamment par laser, de fuites de produits contenus dans des containers au niveau du plancher d'une dite cellule, et
- des moyens de détection d'incendie et d'explosion, notamment par infrarouge, à l'intérieur d'une dite cellule et,
- des moyens d'injection d'eau pressurisé sous forme de rideaux d'eau verticaux en périphérie de ladite cellule et de préférence aussi en fond de cellules créant un quadrillage de rideaux d'eau verticaux autour de chaque colonne de containers, et des moyens d'injection de mousse anti incendie en fond de cellule et de préférence sur ladite piste de dépose, et
- des dispositifs de mise à la terre de tous les containers ainsi qu'un paratonnerre assurant la protection contre la foudre de l'installation de stockage.

Ce dispositif d'injection d'eau pressurisée créant un rideau d'eau entourant ladite cellule constitue une protection limitant les émanations de gaz et de vapeurs vers l'extérieur et assure en outre le refroidissement des grillages ou filets de protection anti-projection.

L'injection de mousse vise à recouvrir les éventuels épandages en fond de cellule inflammables ou enflammés en début d'incendie.

Ces dispositifs d'injection d'eau impliquent un réseau de tuyauterie s'étendant depuis la sous-face de la toiture et/ou en fond de cellule, le caniveau situé en fond de cellule récupère l'eau de déluge et la dirigeant vers ladite grande cuve de rétention ou au puisard de pompage, si la cellule concernée ne possède pas de dite grande cuve de rétention déportée.

L'installation de stockage selon l'invention présentera typiquement les dimensions globales suivantes :
- longueur totale de 100 à 500 m, plus particulièrement de 150 à 350 m, et
- largeur totale de 25 à 100, plus particulièrement de 30 à 80 m.

La présente invention a donc également pour objet un procédé de stockage de matières dangereuses dans lequel on réalise les étapes suivantes :
1) on amène un container sur la ou chaque zone de dépose et de réception jusqu'au niveau d'une cellule destinée à recevoir la catégorie de matières dangereuses contenue dans les containers à stocker, notamment en déplaçant un camion de livraison de containers sur la chaussée de circulation ou en déplaçant un wagon de livraison de containers sur la ligne de transport ferroviaire et en convoyant le container depuis le wagon jusqu'à la zone de manutention, les containers étant positionnés dans les différentes cellules en fonction de la nature et/ou de la classification en tant que matières dangereuses du produit contenu dans le container,
2) on déplace un dit container la zone de dépose et de réception jusqu'à ladite piste de dépose à l'aide d'un dit portique de manutention, notamment en déplaçant le container depuis le camion circulant sur ladite chaussée de circulation ou en déplaçant le container en provenance du wagon depuis la zone de manutention, et,
3) on déplace un dit container depuis ladite piste de dépose jusqu'à l'intérieur de ladite cellule à l'aide dudit portique de manutention, les containers étant posés sur des murets support en fond de cellule ou au sommet d'une colonne de containers comprenant un ou deux containers superposés.

D'autres caractéristiques et avantages de la présente invention apparaîtront à la lumière de la description détaillée d'un mode de réalisation illustratif qui va suivre, fait en référence aux figures suivantes :
- la figure 1 est une vue en perspective d'une installation selon l'invention, depuis un de ses pignons à une extrémité longitudinale,
- les figures 1A et 1B sont des vues en perspective de l'intérieur d'une installation selon l'invention,
- les figures 2A et 2B sont des vues de dessus de l'intérieur d'une installation selon l'invention, avec des cellules pouvant contenir 5 rangées de 14 à 16 colonnes de 3 containers empilés les uns sur les autres, les containers étant principalement des containers de 20 pieds, soit une contenance totale maximale de 240 containers 20 pieds par cellule, ou de 210 containers répartis en 180 containers 20 pieds et 30 containers 30 pieds,
- la figure 2C est une variante de la figure 2B avec des containers de 20 pieds, chaque cellule pouvant contenir 5 rangées de 16 colonnes de 3 containers, soit 240 containers,
- la figure 3 est une vue en coupe d'une installation selon l'invention,
- les figures 4A et 4B sont des vues en coupe et de dessus d'une installation selon l'invention au niveau des containers d'effl uents,
- les figures 5A et 5B sont des vues de dessus (figure 5A) et en coupe (figure 5B) des circuits d'injection d'eau pressurisée et de mousse dans et autour de l'installation selon l'invention,
- les figures 6A à 6B sont des vues en coupe (figure 6A) et en perspective (figure 6B) d'une toiture d'une installation selon l'invention à deux pans équipés de panneaux de surpression et de dits premier et deuxième filets ou grillages métalliques anti-projection. Sur la figure 6B on a représenté ledit deuxième filet ou grillage métallique anti-projection 16b uniquement sur le pan gauche de la toiture, pour mieux faire apparaître les panneaux de surpression 9-2a,
- la figures 7A est une vue en coupe d'une installation selon l'invention dans laquelle sont prévus une ligne de transport ferroviaire et des dispositifs de convoyage par gravitation entre la ligne de transport ferroviaire et le portique de manutention de stockage, et
- la figure 7B est une vue partielle de dessus de l'installation illustrée sur la figure 7A.

L'installation standard de stockage semi-enterré 1 selon l'invention comprend trois cellules enterrées 2-1, 2-2, 2-3, contenant chacune des matières dangereuses compatibles entre elles, étant entendu qu'il est interdit de stocker dans une même cellule des produits susceptibles de réagir ensemble.

Les trois cellules s'étendent respectivement selon une direction longitudinale XX' et sont disposées consécutivement d'une manière adjacente dans cette direction longitudinale XX' de l'installation. Chaque cellule forme une fosse délimitée par quatre murs latéraux, verticaux, enterrés 3a, 3b, reposant sur un plancher de fond 4, à savoir deux murs longitudinaux de cellules 3a, s'étendant parallèlement l'un par rapport à l'autre dans la direction longitudinale XX' et deux murs transversaux de cellules 3b, disposés à chaque extrémité longitudinale de la cellule et s'étendant parallèlement l'un à l'autre dans une direction transversale YY', perpendiculaire à la direction longitudinale XX', assurant la jonction entre les deux murs longitudinaux 3a de chaque cellule.

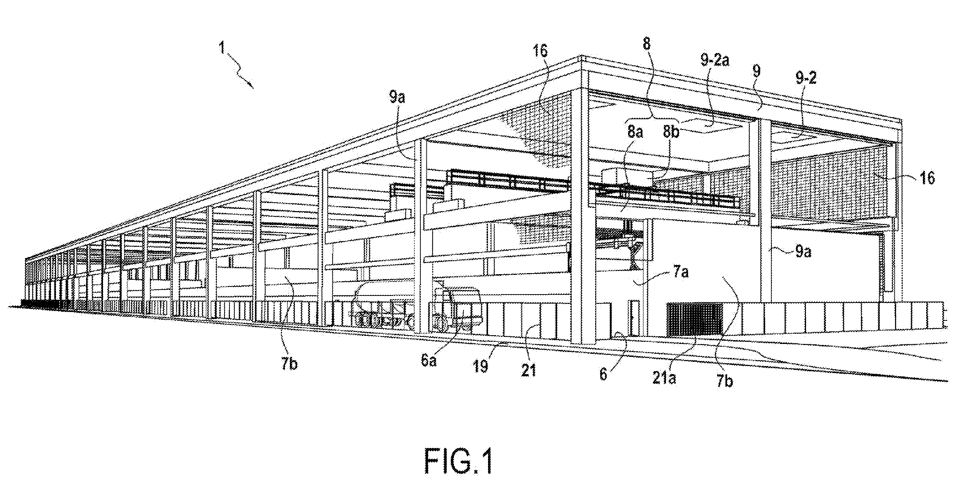

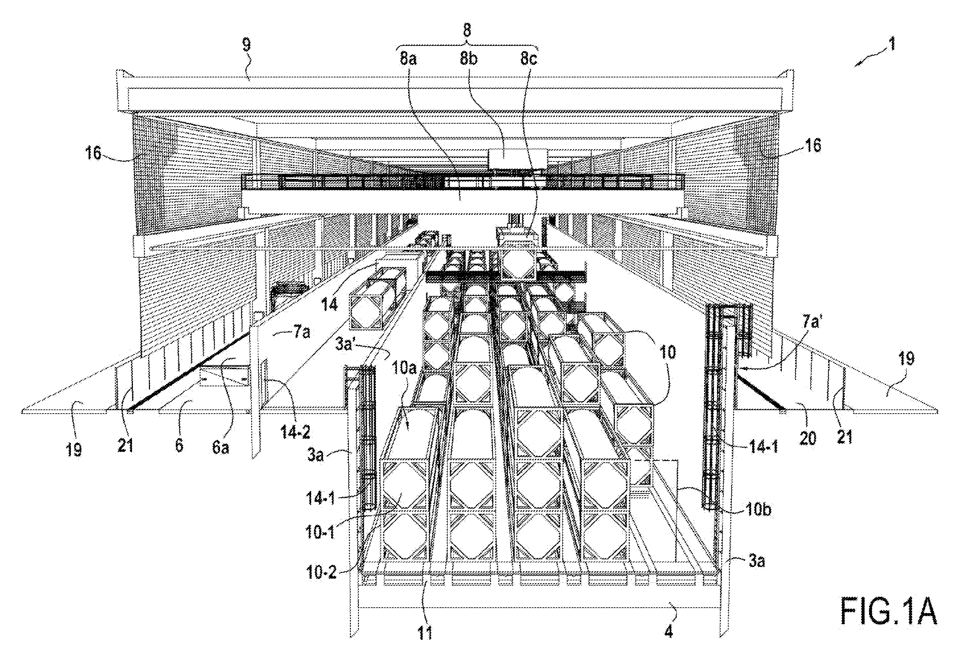

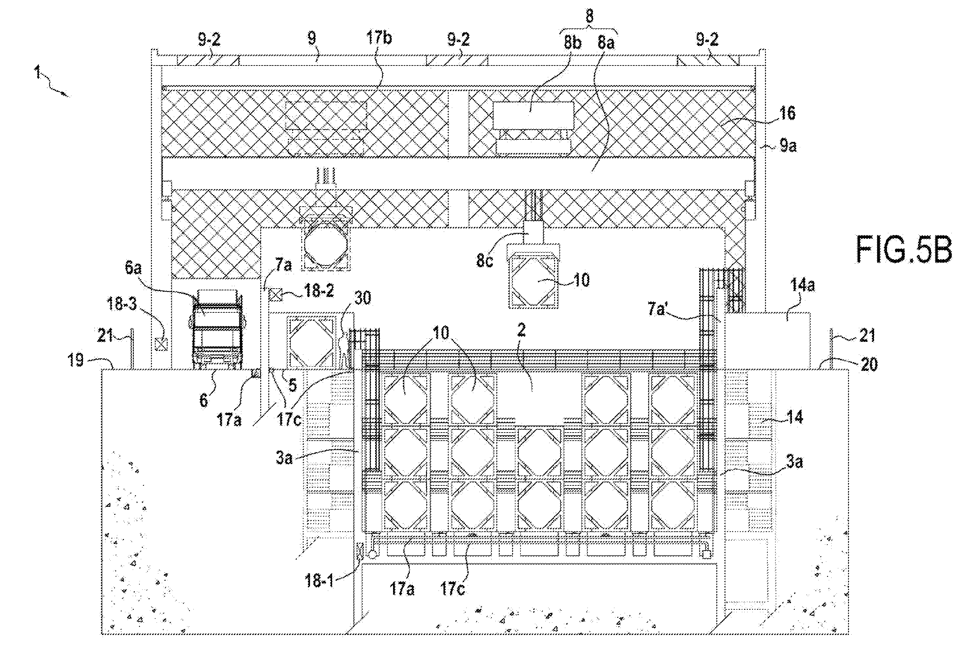

Les différents murs longitudinaux de cellules 3a sont disposés en alignement, et forment en fait un même mur longitudinal enterré de chaque côté des cellules, comme illustré notamment sur les figures 1A, 4A et 5B.

Selon le choix du site de l'installation, la nature du sol naturel peut varier. Par exemple dans des sites dits humides, une ou plusieurs nappes phréatiques peuvent se situer relativement proches de la surface du sol. Ainsi, selon la nature du sol naturel dans lequel sont enterrés les cellules 2 et leurs murs respectifs 3a, 3b, le niveau d'enterrement de ces derniers peut varier ; autrement dit les murs 3a, 3b des cellules sont enterrés plus ou moins profondément dans ce sol naturel.

Dans le cas notamment des sites humides, les murs 3a, 3b présentent des parties supérieures dépassant de la surface du sol naturel, autrement dit des parties supérieures hors sol naturel. En conséquence, ces parties supérieures hors sol naturel des murs 3a, 3b sont entourée sur leurs périphéries externes par une couche de matériau rapporté, tel que du matériau de remblais ; la couche de matériau rapporté ayant une hauteur et une épaisseur suffisante pour que les cellules 2 formant fosse soient complètement enchâssées par à la fois le sol naturel et la couche périphérique de matériau rapporté.

Dans les exemples illustrés sur les figures, les murs transversaux de cellules 3b de deux cellules adjacentes forment un même et seul mur transversal de cellules 3b enterré.

L'ensemble des trois cellules disposé consécutivement dans la direction longitudinal XX' est surmonté et entouré d'une enceinte formée de deux murs longitudinaux d'enceintes 7a, 7a'.

Un premier mur longitudinal d'enceinte 7a est situé au-delà du premier mur longitudinal de cellules enterré 3a-3a' de cellules à une distance suffisante, de manière à former ou délimiter une piste de dépose rectiligne 5, longitudinale entre ce premier mur longitudinal de cellules 3a et ce premier mur longitudinal d'enceinte 7a.

Ledit premier mur longitudinal enterré de cellules 3a est surmonté d'un muret 3a' empêchant un container 10 posé sur la piste de dépose 5 de chuter dans le fond de la cellule concernée.

Un deuxième mur longitudinal d'enceintes 7a' est disposé au-dessus d'un deuxième mur longitudinal de cellule 3a. Autrement dit, ce deuxième mur longitudinal d'enceintes 7a' vient dans le prolongement du deuxième mur longitudinal de cellule 3a, et ces deux murs 7a' et 3a forment avantageusement un seul et même mur comme visible notamment sur les figures 1A, 3 et 4A.

Les murs longitudinaux 7a, 7a' d'enceintes sont des murs en béton coupe-feux « 2 heures » (grade « 2H ») et s'étendent sur une hauteur de 4 m correspondant à la hauteur d'un camion 6a transportant un container de format standard 10 décrit ci-après.

Les murs transversaux d'enceintes 7b à chaque extrémité longitudinale de l'enceinte entourant l'ensemble des cellules, s'étendent sur une hauteur de 7 m au-dessus de la piste de dépose 5.

Une chaussée de circulation 6 de camion 6a s'étend dans la direction longitudinale XX' du côté extérieur du mur longitudinal d'enceinte 7a délimitant la piste de dépose 5 et sur toute la longueur des trois cellules. Les camions transportant des containers 10 à destination ou en provenance des cellules 2, il est bien entendu que cette chaussée de circulation 6 constitue une zone de dépose et de réception des containers 10 provenant soit des camions 6a, soit des cellules 2 à destination des camions 6a.

Un portique de manutention 8, dit portique de manutention de stockage 8, motorisé de container 10 comportant une poutre 8a, s'étendant dans ladite direction transversale YY' au-dessus des cellules, à ladite poutre comprenant des moyens de type rainure ou glissière de guidage d'un premier chariot 8b, apte à déplacer un dit container 10, suspendu par un cadre de préhension 8c au dit premier chariot, horizontalement le long de ladite poutre, dans la direction transversale YY', à une hauteur supérieure à celle desdits murs longitudinaux d'enceintes 7a, 7a' depuis un dit camion 6a jusqu'au-dessus d'une dite cellule, puis verticalement depuis une certaine hauteur jusqu'au plancher de fond 4 d'une dite cellule.

Ladite poutre 8a coopère avec des seconds rails de guidage longitudinaux 8d supportés par les poteaux 9a supportant la toiture 9 au-dessus de l'installation, lesdits poteaux 9a étant disposés de chaque côté de l'installation, alignés dans la direction longitudinale XX'.

Les second rails de guidage longitudinaux 8d coopèrent avec des second chariots 8e aptes à déplacer ladite poutre 8a, le long desdits seconds rails de guidage, au-dessus des murs transversaux d'enceinte 7b.

Comme mentionné précédemment, les murs transversaux d'enceintes 7b sont plus hauts que les murs longitudinaux d'enceintes 7a, 7a', de sorte que :
- pour déplacer la poutre 8a dans la direction longitudinale XX' au-dessus des murs transversaux 7b, le chariot 8b ne doit supporter aucun container 10 qui soit suspendu au cadre de préhension 8c et,
- lorsque l'on déplace le premier chariot 8b avec un container 10 suspendu au cadre 8c, en déplacement dans la direction transversale YY', ledit container 10 suspendu au cadre 8c ne dépasse en hauteur la hauteur des murs transversaux d'enceintes 7b.

Ainsi, si une explosion ou un sinistre intervient au niveau du container 10 suspendu cadre 8c, le sinistre ne se propage pas à une cellule adjacente dans la direction longitudinale.

L'installation comprend une toiture étanche légère 9, supportée par des poteaux 9a disposés à l'extérieur de la chaussée de circulation 6 et à l'extérieur du mur longitudinal d'enceintes 7a', à l'extrémité opposée de l'installation dans la direction transversale YY'. La toiture 9 est située au-dessus du portique de manutention de stockage 8 et de ladite chaussé de circulation 6. Ainsi, le portique de manutention de stockage 8 est disposé à l'intérieur de la structure définie en partie par la toiture 9 et les poteaux 9a.

Des espaces ouverts permettant la circulation et l'évacuation de l'air entre les poteaux 9a et entre la toiture 9 et les extrémités supérieures des murs d'enceintes longitudinaux 7a et 7a', sont équipés de grillages ou filets métalliques de protection 16 dits anti-explosion connus de l'homme de l'art et commercialisés notamment par la société GEOBRUGG (Suisse). Ces grillages s'étendent depuis la surface du bord périphérique 9-1 de la toiture 9 jusqu'à une hauteur de 2 m au-dessus du sol, de manière à permettre à un opérateur 30, membre du personnel de l'installation, de ne pas être empêché de quitter l'installation par le grillage, en cas de sinistre.

Sur certaines figures les filets 16 ont été schématisés uniquement avec des lignes horizontales, mais en fait il s'agit de grillages quadrillés formant des mailles, sensiblement en forme de losange.

Aux extrémités longitudinales de l'installation, deux autres filets ou grillages métalliques 16 s'étendent depuis la surface du bord 9-1 inférieur périphérique de la toiture 9 jusqu'en dessous de l'extrémité supérieure des murs transversaux d'enceintes 7b d'extrémité à l'extérieur de ceux-ci.

La toiture 9 couvre en largeur la chaussée de circulation 6, la zone de dépose 5 et les cellules 2.

A l'extérieur de l'enceinte du côté opposé à la chaussée de circulation 6 se trouve une zone formant terre-plein technique 20, s'étendant le long et à l'extérieur du mur longitudinal d'enceinte 7a'. Cette zone formant terre-plein technique 20 réceptionne différents moyens techniques qui serons décrits ci-après.

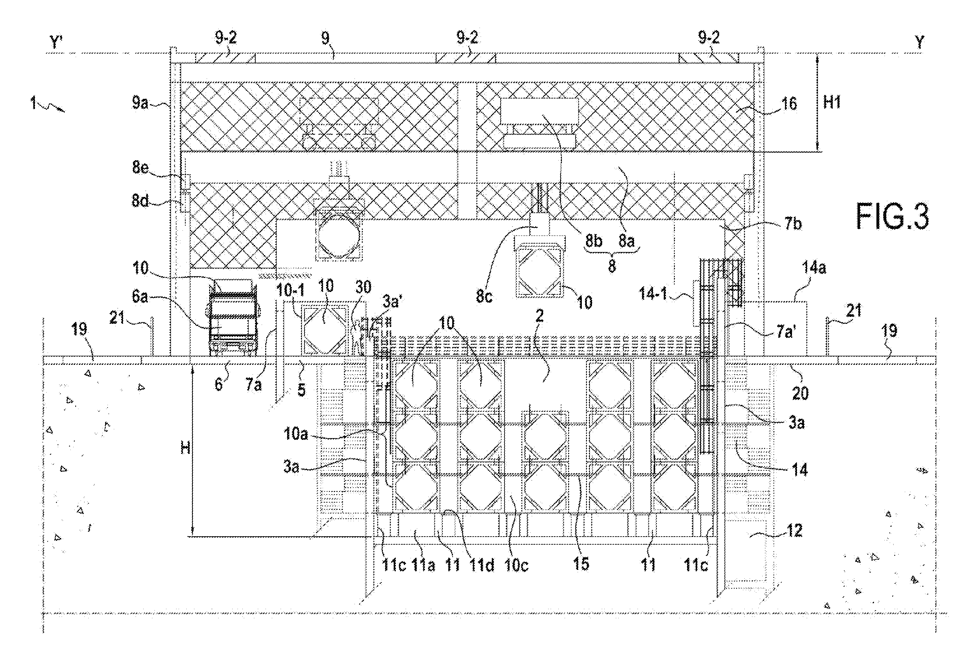

Une voie d'accès pompiers périphérique 19 est située à l'extérieur de l'installation des deux côtés juste au-delà d'une clôture 21 comprenant différentes portes d'accès (non représentées) clôturant l'installation entre la piste d'accès pompiers 19 et la chaussée de circulation 6 d'un côté et la piste d'accès pompiers 19 et la zone formant terre-plein technique 20 de l'autre côté, comme visible notamment sur la figure 3.

Chaque cellule 2, 2-1, 2-2, 2-3 contient des containers 10 empilés par colonne 10a de trois containers, les différentes colonnes 10a étant disposées en rangée 10b composées chacune de 14 (cellule 2-1) à 16 colonnes (cellules 2-2 et 2-3) au maximum de trois containers par colonne.

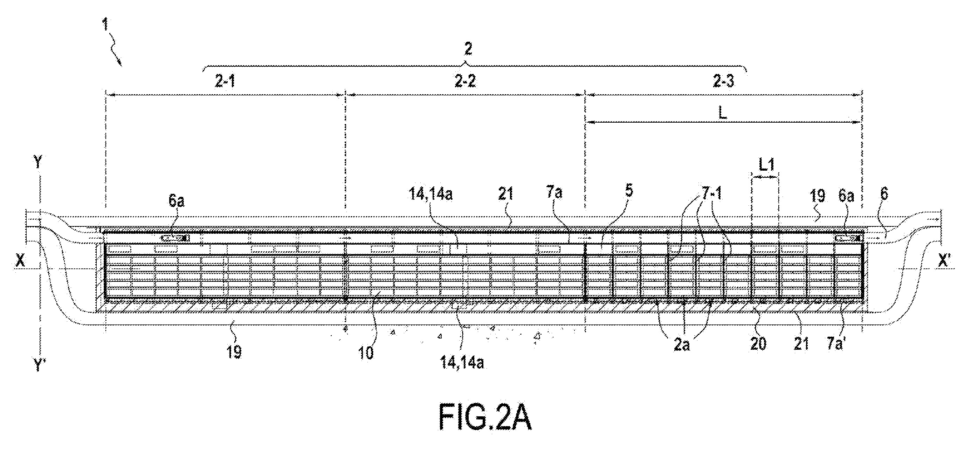

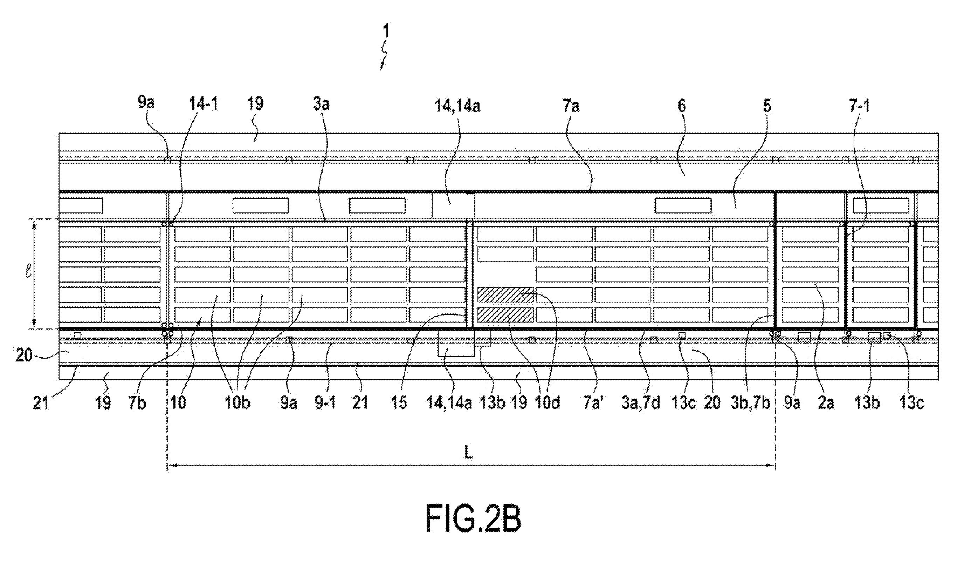

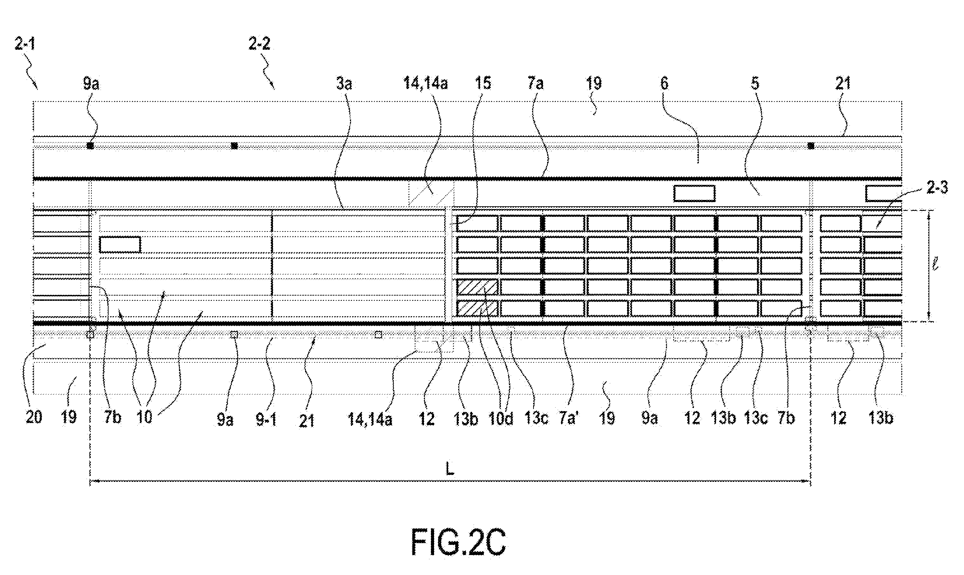

Le dimensionnement des cellules et des UTI (voir ci-après) permet ainsi de contenir 150 containers standard de 30 pieds (figure 2B) ou 240 containers standard de 20 pieds (figure 2c).

Les UTI 10 sont constitués d'un cadre parallélépipédique 10-1 supportant un cylindre 10-2.

Le plancher 4 de chaque cellule 2 est partitionné par des murets longitudinaux 11 parallèles entre eux s'élevant au-dessus du plancher 4. Chaque colonne 10a de containers repose sur deux dits murets longitudinaux 11 parallèles délimitant des cuvettes de rétention 11a qui cependant communiquent entre elles. Et, ledit plancher 4 est incliné à double pente convergent vers le milieu de la longueur de la cellule où un caniveau transversal 11b en pente dirige les produits dénommés « effluents » s'échappant des containers 10 en stock depuis lesdites cuvettes de rétention 11a vers une grande cuve de rétention 12 enterrée à l'extérieur de la cellule et également disposée à mi-longueur de la cellule. Les pentes du fond de la cellule sont de l'ordre de 1,5 % et celle du caniveau 11b de 2%.

Les cellules (2-1,2-2) comportent deux colonnes 10a de trois containers spécifiques destinés à recevoir des effluents s'étant échappés des autres containers, ces containers 10d étant appelés « containers d'effluents ».

En fait, ces containers d'effluents 10d sont destinés à récupérer lesdits effluents depuis la grande cuve de rétention 12, par l'intermédiaire de canalisations 13a installées entre la grande cuve de rétention 12 et chacun des containers d'effluents 10d, les effluents circulant dans lesdites canalisations 13a grâce à des moyens de pompage 13b disposés sur la zone formant terre-plein technique 20 à l'extérieur de l'enceinte.

Les colonnes de containers d'effluents 10d comme la grande cuve de rétention 12 sont situées sensiblement à mi-longueur de chaque cellule.

Les différents containers d'effluents 10a peuvent être inspectés par le personnel 30. A cet effet, des passerelles d'accès 15 disposées dans la direction transversale YY' traversent la cellule sur trois niveaux de hauteurs superposées au regard des colonnes d'effluents 10d, pour en permettre l'accès et la visite par le personnel 30. Le personnel 30 empreinte, pour ce faire, des escaliers 14 disposés à l'extérieur des murs longitudinaux de cellules 3a, à savoir au niveau de la piste de dépose 5 d'un côté et, à l'extérieur du deuxième mur longitudinal d'enceintes 7a' de l'autre côté.

Ces deux escaliers 14 sont encloisonés chacun dans une cage d'escaliers 14a et permettent d'accéder par des portes 15-1 aux trois passerelles 15 donnant accès aux trois niveaux de containers 10d de colonnes de containers 10d, à partir de chacun des deux escaliers 14 disposés aux deux extrémités des passerelles 15a dans la direction transversale YY' sensiblement à mi-longueur de chacune des cellules 2-1 et 2-2.

Les containers à effluents représentent un volume de stockage minimal de 180 m³ et sont eux-mêmes manipulables par le portique, comme décrit précédemment.

Les deux escaliers 14 encloisonés à l'extérieur des cellules 2-1 et 2-2 donnent accès, par l'intermédiaire des passerelles 15, aux containers d'effluents 10d de façon à ce qu'un opérateur 30 puisse venir inspecter leur contenu et opérer sur des vannes de connexion/déconnexion au niveau des canalisations 13a. Aux quatre angles de chaque cellule 2, sont en outre installées des échelles à crénoline 14-1.

La dernière cellule 2-3 ne comporte pas de containers d'effluents 10d ni d'escaliers 14, ni de passerelles 15 car cette cellule est partitionnée en sous-cellules 2a par des cloisons transversales 7-1. Ces sous-cellules, dont la plus petite peut ne contenir que 15 containers, à savoir une rangée de cinq containers sur trois niveaux, sont ainsi isolées les unes des autres par des vannes de sectionnement non représentées).

Le volume de rétention d'une sous-cellule 2a est dimensionné pour pouvoir contenir au moins le volume total d'un container plein.

Une sous-cellule 2a accueille des produits dont les spécificités chimiques nécessitent de les séparer des autres produits pour diverses raisons explicitées ci-après.

Les effluents contenus dans les sous-cellules 2a isolées par les cloisons transversales 7-1 peuvent comprendre des moyens de pompage 13b et sont dotés de grandes cuves de rétention déportées enterrées comme c'est le cas des effluents des cellules 2-1 et 2-2. C'est le service de sécurité de l'installation qui décide du moyen approprié de vidange des sous-cellules de la cellule 2-3 par ouverture de vannes en direction d'un puisard de cellules enterrées à l'extérieur de la cellule et la mise en oeuvre de moyens de pompage mobiles.

Un système de détection 18-1 d'épandage par laser au niveau des cuvettes 11 permet de détecter tout niveau de liquide. Des dispositifs extincteurs d'incendie 18-3 sont fixés sur chaque poteau 9a.

Un système de détection incendie 18-2 par infrarouge et plusieurs capteurs d'explosimètres sont également disposés dans chaque cellule contre les murs longitudinaux 3a et de préférence également sur la piste de dépose 5 et la voie technique 20.

L'installation de stockage est gérée avec un système informatisé de gestion des comptabilités et de localisation des containers à partir des codes relatifs au produit et à sa classe de matières dangereuses à l'identification de chaque container et du produit qu'il contient par des marqueurs RFID.

Le stockage des produits enterrés dans les cellules ne contenant que des produits compatibles entre eux, avec des ouvertures latérales 16 permet du fait des grillages de limiter les surpressions susceptibles d'endommager les murs de séparation des cellules et de l'enceinte ou le toit 9 qui comporte des panneaux de surpression, en cas d'explosion ou incendie.

L'enceinte de stockage est entièrement clôturée par une clôture 21, vidéo-surveillée et comprenant deux portails d'accès 21a à chacune de ses extrémités longitudinales débouchant sur l'accès à la chaussée de circulation 6. La clôture 21 dispose toutefois de plusieurs portes de dégagement (non représenté) avec barres anti-panique permettant au personnel 30, présent sur l'installation de stockage, de s'en échapper rapidement.

La zone formant terre-plein technique 20 accueille :
- la rangée de poteaux supportant la toiture 9,
- l'un des rails de roulement 8d de la poutre 8a du pont roulant 8,
- les moyens de pompage 13b à effluents,
- des groupes de réchauffage 13c permettant le réchauffage et le maintien en température de certains produits stockés, et
- les cages d'escaliers 14a donnant accès aux passerelles 15 et à des trémies de maintenance des différentes tuyauteries 13a de pompage des effluents depuis les containers d'effluents 10, 11d et donnant accès aux grandes cuves de rétention déportées 12.

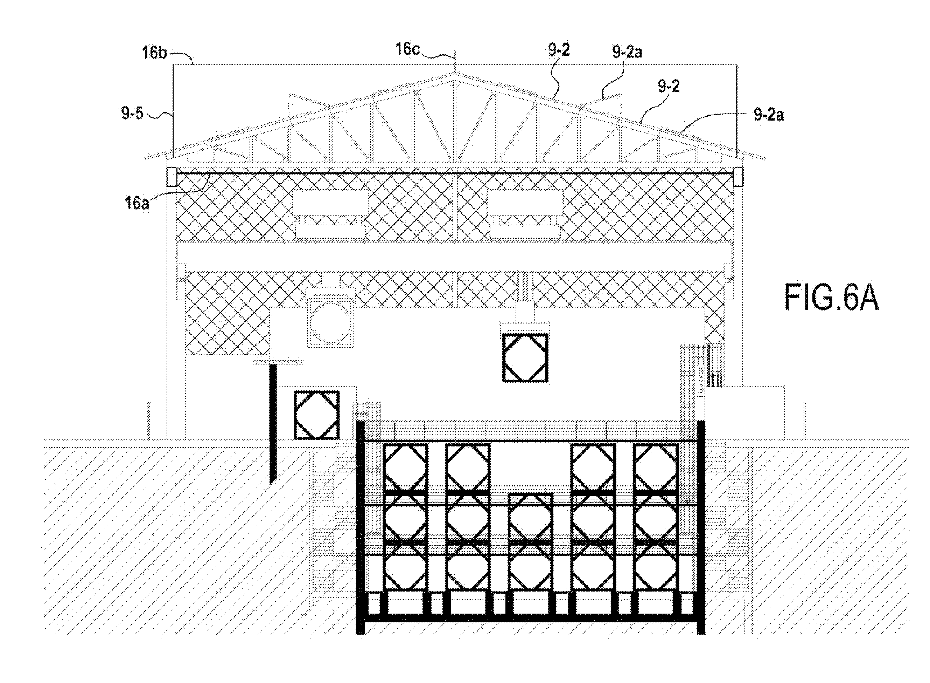

La toiture 9 peut être une toiture plate en béton. Toutefois, de préférence, comme représenté sur les figures 6A à 6B, la toiture est une toiture à deux pans, dont la couverture est réalisée en matériau plus léger, notamment sous forme de panneaux 9-2 incorporant de la laine de roche résistant au feu confinée entre deux tôles d'acier, tels que les panneaux Trimoterm^{®} SNV fabriqués par la société TRIMO (Slovénie), lesdits panneaux 9-2 étant supportés par une charpente de poutres métalliques en treillis sur laquelle est appliquée par flocage un revêtement coupe feu, notamment de laine de laitier.

Dans tous les cas, ladite toiture comprend des panneaux de surpression 9-2a constitués de panneaux en acier incorporant de la laine minérale résistant au feu confinée entre deux tôles d'acier, tels que ceux fabriqués par la société HAZ SAFE (Etats-Unis). Ces panneaux de surpression 9-2a sont à fermetures magnétiques montées sur des charnières aptes à s'ouvrir par rotation à partir d'une valeur seuil de surpression donnée. On peut aussi mettre en oeuvre des panneaux de surpression 9-2a montés sur bâtis fixes et aptes à se rompre à partir d'une dite valeur seuil de surpression donnée, tels que ceux fabriqués par la société REMBE (Allemagne) sous la référence ODU/ODV ou EDP.

Lorsqu'ils ne sont pas sollicités, ces panneaux de surpression 9-2a assurent avec les autres panneaux 9-2, l'étanchéité de la toiture, qu'ils soient montés sur charnières et/ou sur bâtis fixes. Ces panneaux de surpression 9-2a s'ouvrent dès que la surpression au niveau de leur sous face atteint une valeur seuil, ladite valeur seuil étant comprise entre 6 et 12 millibar (typiquement 10 millibar) pour les panneaux montés sur charnières à fermeture magnétique et 25 millibar pour les panneaux ODU/ODV ou EDP de la société REMBE montés sur bâtis fixes, de façon à évacuer l'air et ainsi limiter la destruction de la toiture consécutivement à une explosion. Ces panneaux de surpression 9-2a de 1 à 3 m2 sont régulièrement espacées sur la surface de la toiture, notamment avec 3 panneaux de surpression 9-2a dans la direction transversale YY' par pan de toiture. Un certain pourcentage de la surface de la toiture 9, notamment de 10 à 30%, est donc ainsi constitué par des panneaux de surpression 9-2a, qui ne s'ouvrent que lorsque la surpression atteint un seuil prédéfini, ceci afin d'éviter des dégâts trop importants à la structure porteuse de la toiture. Si les panneaux de surpression ne suffisent pas à évacuer la surpression, des plaques d'acier de toiture peuvent se détacher de la toiture, car lesdites plaques d'acier sont désolidarisables individuellement de la charpente en cas de trop forte surpression pendant trop longtemps. Des dits deuxièmes filets métalliques anti-projection 16b au sommet des poteaux 9a s'étendent horizontalement au-dessus de la surface de la toiture, supportée par des poutres treillis 9-5 fixées sur les poteaux 9a et non pas posés directement sur la toiture pour éviter leur déchirement, et récupèrent alors les morceaux de toiture expulsés. Le dispositif de récupération est complété par un dit premier filet ou grillage métallique horizontal complémentaire 16a fixé en sous-face de la toiture, directement sur des éléments 9-4 de la charpente (9-3), dont la finalité est d'une part de ne pas s'opposer à la surpression d'air et d'autre part, d'assurer la récupération des morceaux de toiture à la retombée éventuellement et enfin de protéger ladite toiture. Lesdits premier et deuxième filets ont typiquement des mailles permettant de retenir les objets à section supérieure à 100 cm².

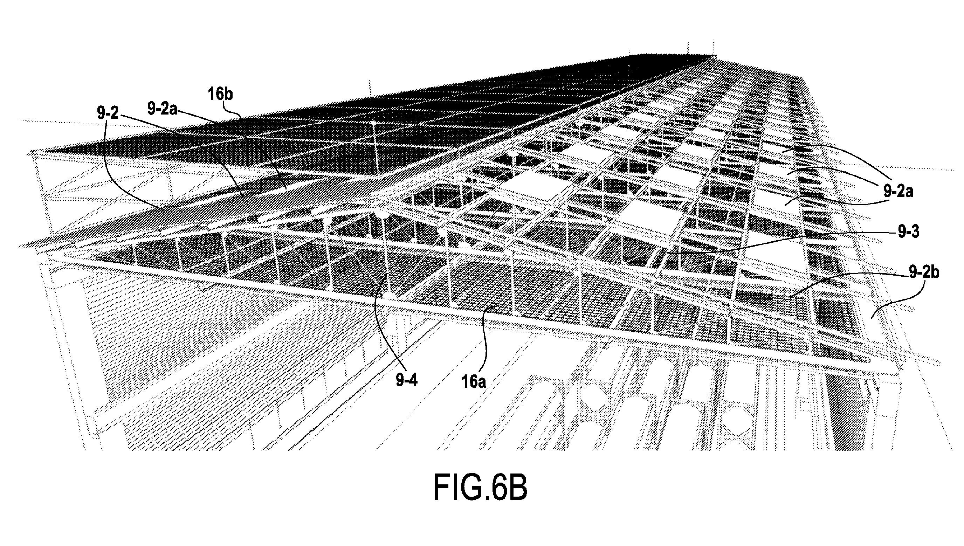

Sur la figure 6B, on a représenté le pan droit de la toiture avec seulement les panneaux de surpression, le reste des emplacements 9-2b des autres panneaux 9-2 de la toiture étant ouvert et lesdits deuxièmes filets étant retirés de façon à mieux faire ressortir lesdits panneaux de surpression 9-2a.

Les panneaux 9-2 sont montés sur la charpente 9-3, de préférence par des fixations sécables permettant de les désolidariser de la charpente à partir d'une certaine force ou pression qui est supérieure à ladite valeur seuil de surpression des panneaux 9-2a, ceci afin d'éviter un endommagement de la charpente dans le cas où l'ouverture ou la rupture des panneaux de surpression 9-2a ne serait pas suffisante.

En variante, la structure de la toiture légère étanche avec une couverture en bac acier peut être supprimée en ne conservant que des filets ou grillages horizontaux 16a-16b et/ou des cadres ou treillis métalliques portés par lesdits poteaux 9a pour éviter la projection vers l'extérieur de morceaux de containers provenant de l'enceinte.

Les poteaux 9a sont dimensionnés pour supporter, outre le toit 9, la structure du pont roulant 8. La couverture peut être en bacs acier comme indiqué ci-dessus, mais d'autres matériaux plus légers et présentant des caractéristiques de résistance au feu compatibles avec les matières dangereuses stockées peuvent être envisagées, typiquement des matériaux incombustibles de classe M0

En sous face de la toiture, sur le périmètre en bordure 9-1 de toiture, ainsi qu'à mi-hauteur des poteaux 9-a sont prévus deux réseaux de tuyauteries hautes 17b permettant la pulvérisation de deux rideaux d'eau pressurisé tout autour de l'installation, de manière à circonscrire davantage les émanations éventuelles provenant de l'intérieur de l'installation de stockage en cas de sinistre.

Un troisième circuit d'eau pressurisé en fond de cellules 17a, formé par des dispositifs de type queues de paon, permet de créer un quadrillage de rideaux d'eau verticaux autour de chaque colonne de 3 containers voire par blocs de trois colonnes.

Un même circuit d'eau pressurisé créant un rideau d'eau à partir de dispositifs en queue de paon, est installé sur la chaussée de circulation 6 contre le mur longitudinal d'enceintes 7a et assure également une protection entre l'intérieur de l'enceinte contenant les cellules 2 et la chaussée de circulation 6 et le camion 6a.

Enfin, des circuits de tuyauteries d'injection de mousse 17c situés au niveau du fond 4 de chaque cellule sur tout le périmètre de celle-ci, permet d'injecter par une distribution en peigne de la mousse anti-incendie afin de recouvrir le fond de la cellule en cas de sinistre pour éteindre ou prévenir un incendie. Ce type de mousse est connu de l'homme de l'art sous le nom d'émulseur type AFFF ou AFFFP (Agent Formant un Film Flottant Protéinique) et est commercialisé entre autres par la société EAU & FEU (France).

De tels circuits d'injection de mousse 17c sont également prévus sur la piste de dépose 5.

En plus d'une porte d'accès 14-1 à chaque escalier 14, les premiers murs longitudinaux d'enceinte 7a du côté de la piste de dépose comportent quatre portes coupe-feu 14-2 d'accès à la piste de dépose à ses extrémités, ainsi qu'au quart et aux trois-quarts de sa longueur.

Une mise à la terre des containers s'effectue par le biais de plaques métalliques anti étincelles raccordées à la terre et équipant au moins un muret support 11 sur deux sur toute sa longueur. Cette mise à la terre peut aussi s'effectuer grâce à un revêtement conducteur et anti étincelles de la surface des murets support, tel que le qualitop métal fabriqué par ROCLAND (France).Chaque colonne de containers est mise à la terre via le container du bas qui repose directement en contact du muret dont la surface est conductrice. Et, un paratonnerre 16c, monté sur la toiture assure la protection contre la foudre de l'installation selon l'invention.

Préalablement à son entrée dans l'installation de stockage 1, tout container 10 subit une inspection visuelle de son état extérieur par un opérateur 30. Si l'opérateur ne décèle pas d'anomalie, il fixe sur le container un marqueur RFID comportant d'importantes informations (référence du container, code ONU, classe de danger, nom du produit, tonnage, etc..). Des capteurs RFID fixés en entrée et en sortie 21a de l'installation de stockage identifient la présence ou non du container à l'intérieur de l'installation de stockage. Le positionnement du container dans telle cellule ou sous-cellule est défini par un système automatisé en fonction de la nature du produit et des manutentions programmées à venir.

Une fois le container en place, l'opérateur 30 le localise géographiquement, ce qui renvoie l'information au système automatisé, assurant la supervision de l'installation de stockage.

L'installation de stockage selon l'invention a pour finalité de stocker des matières dangereuses (ci-après abrégé MD) conditionnées en UTI et autorisées à circuler sur la route et le train (à l'exception des classes 1 (matières explosives), 6.2 (matières infectieuses) et 7 (matières radioactives), de façon la plus sécurisée possible pour une durée, au moins égale, à la date d'inspection réglementaire de l'UTI. L'ensemble des caractéristiques et dispositifs de l'installation de stockage décrits ci-dessus est destiné à limiter les effets d'un sinistre avec des moyens d'intervention adaptés à sa nature et aux produits impliqués. Ainsi, l'installation de stockage répond aux quatre problématiques principales suivantes :
1. Eviter tout contact direct d'une source d'ignition avec les produits stockés. Cela implique en particulier :
   - la non pénétration des véhicules amenant les UTI dans les cellules de stockage,
   - l'installation de matériels électriques combinés à des moyens de détection 18 des fuites et d'atmosphères explosives interdisant toute opération de manutention dès la détection d'une anomalie,
2. Séparer les matières dangereuses en fonction de leur classe de transport en appliquant des règles de séparation s'inspirant directement du code IMDG (code maritime international des marchandises dangereuses) pour les cargaisons de containers stockées « en pontée » sur les navires porte-containers. Cela implique :
   - la traçabilité systématique du produit et de son container dès qu'un UTI de MD pénètre dans le stockage et ce jusqu'à ce qu'il en sorte,
   - un partitionnement du stockage en fonction des règles de compatibilité afin de prévenir tout phénomène réactionnel résultant d'un mélange de deux produits, et
   - l'adaptation du traitement d'une éventuelle fuite à la nature du produit.
3. En cas d'épandage, le canaliser vers la grande cuvette de rétention déportée 12 puis déclencher un processus de pompage approprié fonction de la nature du produit épandu. Objectif poursuivi, éviter toute formation de nappe sous les containers susceptible d'initier un incendie en canalisant hors zone de stockage les fuites éventuelles et en les reconditionnant rapidement dans des capacités tenues disponibles.
4. En cas de survenance d'un sinistre (incendie, explosion, projections) limiter son impact à l'emprise foncière du terrain dans lequel l'installation de stockage s'inscrit (limitation des zones Z1 correspondant au seuil des effets létaux et Z2 au seuil des effets significatifs au périmètre de la plate-forme logistique dans laquelle s'intègre le stockage).

Les matières dangereuses sont réparties par la réglementation ADR (Accord européen relatif au transport international des marchandises dangereuses par route) en différentes classes selon le type de danger qu'elles présentent. De nombreuses matières possèdent cependant plusieurs propriétés dangereuses : Certaines peuvent ainsi être aussi bien inflammables que toxiques ou être la fois toxiques et corrosives. Dans de tels cas, la matière est rangée dans la classe qui correspond au danger le plus élevé pendant le transport.

Avantageusement, les règles de séparation des MD appliquées dans l'installation de stockage s'inspirent directement du code IMDG en l'assimilant à un navire porte containers.

Les règles de séparation ont été établies par similitude à celles définies dans le chapitre 7.2 « Séparation des matières » du code IMDG 2008, en appliquant au stockage les dispositions imposées par le code IMDG à une cargaison stockée « en pontée ».

L'application de ces règles se traduit au niveau du stockage par les règles d'implantation suivantes :
- Chaque classe ou division identifiées dans le tableau de compatibilité disposera d'une cellule 2 ou d'une sous cellule 2A où seront stockées uniquement des MD appartenant à la même classe ou division.
- Chaque sous cellule qui est l'entité minimale de stockage sera dimensionnée pour accueillir longitudinalement 2 UTI de 20 pieds, soit une capacité maximale par sous cellule de 30 UTI 20 pieds représentant un volume de stockage maximal de 720 m³, ce type d'UTI étant le plus répandu au niveau conditionnement maritime. Chaque sous-cellule 2a disposera longitudinalement, d'un espace de circulation dimensionné de façon à avoir au minimum une distance de 3 mètres séparant horizontalement 2 UTI stockés dans 2 sous cellules 2a contiguës.

Les MD inflammables des classes 3 (liquides) qui représentent le plus fort contingent de MD à stocker, seront stockés dans une même cellule disposant d'un dispositif automatisé de pompage des éventuels épandages afin de reconditionner au plus vite ces MD susceptibles d'inflammation. La trame de la cellule sera par exemple dimensionnée pour accueillir 80% de containers 20 pieds et 20% de containers 30 pieds.

Certaines précautions particulières suivantes sont requises :
▪ Les sous-cellules 2a contenant les MD de classe 5.1 (matières comburantes) seront implantées le plus loin possible des cellules contenant des MD inflammables (classes 2.1, 3 et 4)
▪ La classe 8 est subdivisée en 2 sous classes :
   o Matières corrosives basiques
   o Matières corrosives acides
   o Chacune de ses 2 sous classes dispose de sous - cellules 2a totalement distinctes afin d'éviter tout phénomène réactionnel qui serait provoqué par le mélange d'une MD corrosive acide avec une MD corrosive basique
▪ Chaque MD confinées dans une sous cellule 2a dispose d'une sous cuvette de rétention spécifique maintenue isolée de la cuvette de rétention de la cellule principale. La mise en communication de cette sous cuvette avec les moyens de pompage de la cuvette principale pourra dans certains cas être possible. Cette opération ne sera pas automatique mais ne sera effectuée par le personnel d'exploitation, qu'après vérification de son innocuité. Sinon, des moyens de pompage spécifiques seront utilisés
▪ Les cellules contenant des MD classe 9 seront utilisées comme cellule tampon entre les cellules de classe 8 acide / classe 8 basique / classe 4.2 matières sujettes à inflammation spontanée.

Afin de garantir ces différentes règles de compatibilité l'installation de stockage se compose de 3 cellules principales 2-1,2-2 et 2-3 :
o La cellule 2-1 « MD INFLAMMABLES » comporte des MD inflammables de classe 3 avec une cuvette de rétention en fond (ou plancher de cellule) commune à l'ensemble de la cellule. Elle est connectée en permanence à sa grande cuve de rétention déportée 12 qui dispose d'un dispositif automatique d'obturation (non représenté), telle qu'une vanne guillotine fermant le caniveau, lui permettant de s'isoler de la cellule 2-1. La grande cuve de rétention déportée est reliée aux colonnes de containers d'effluent 10-d qui disposent d'un cantonnement spécifique par des murs transversaux coupe feu pour les séparer totalement des containers stockés dans la cellule 2-1.
o La cellule 2-2 « MD MIXTES »comporte des matières corrosives de classe 8 avec séparation physiques des MD corrosives acides de celles basiques, des matières diverses de la classe 9 et des matières sujettes à inflammation spontanée de la classe 4.2. Le fond de la cellule est partitionné en huit cuvettes de rétention 11a isolable de la grande la cuve de rétention déportée 12La cellule 2-3 « MD SPECIFIQUES » comporte des MD des classes 2.1, 2.2, 2.3, 4.1, 4.3, 5.1, 5.2, 6.1 avec un partitionnement toute hauteur 7-1 en sous cellules 2a totalement indépendantes les unes des autres, disposant de moyens de prévention 17a-17c et de pompage 13c spécifiques.
   - Une cellule de base accueille 5 rangées d'UTI de 20 ou 30 pieds sur 3 niveaux (Niveau 0 = surface de la chaussée de circulation 6).

Les dimensions extérieures des UTI sont normalisées pour les containers maritimes 20 pieds: hauteur H = 2,591 m ; largeur l = 2,438 m, longueur L = 6,058 m. Pour les containers de 30 pieds seule la longueur diffère et atteint L = 9,10 m.

L'installation de stockage décrite dans cet exemple présente les dimensions globales suivantes :
- longueur totale d'environ 350 m et,
- largeur totale d'environ 45 m.

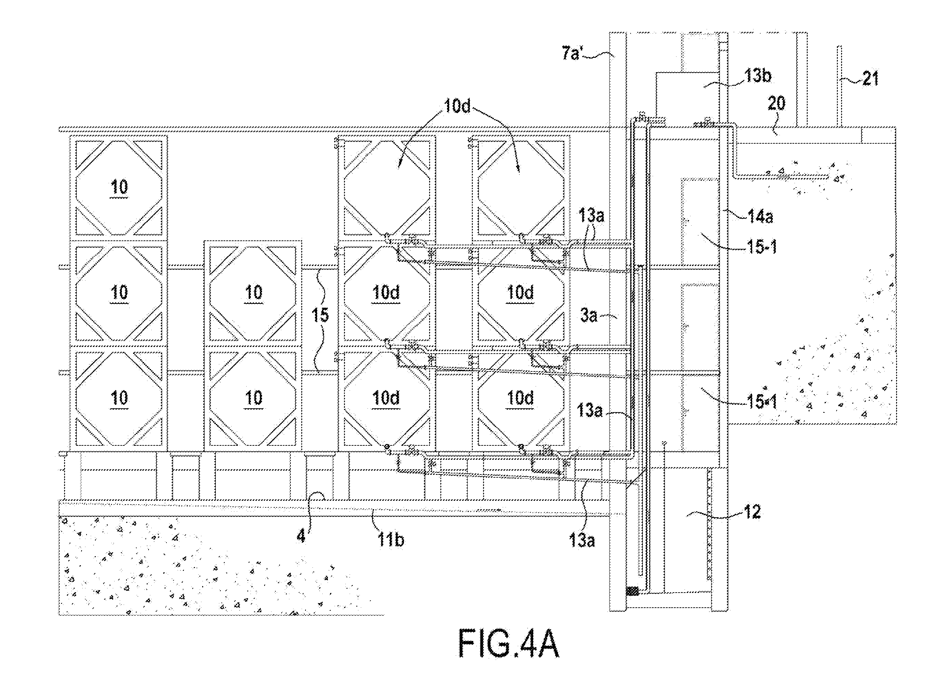

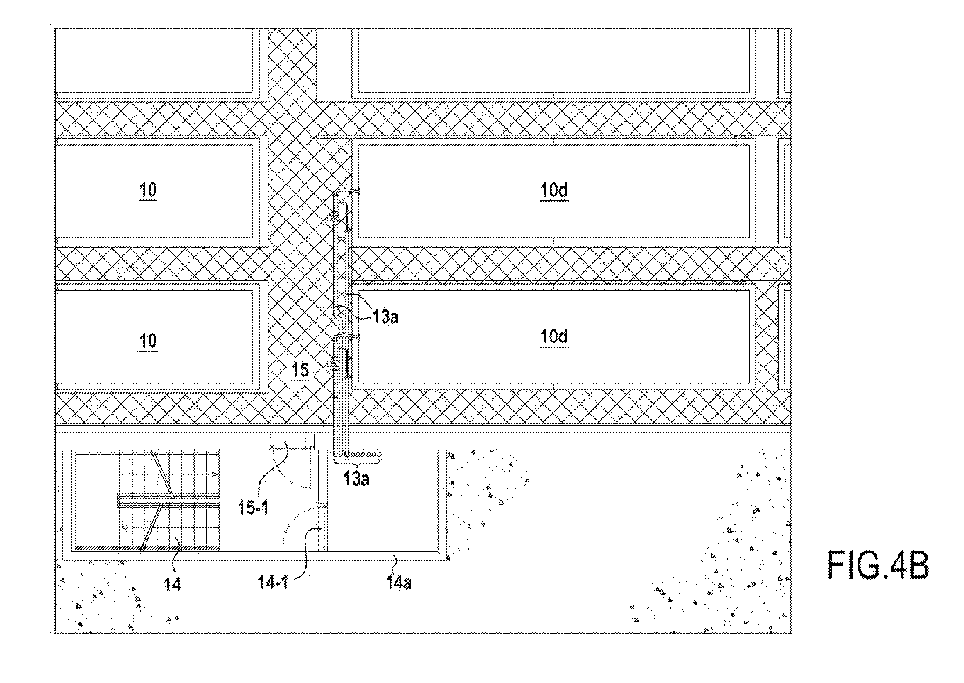

Les murs coupe-feu (3a, 3b) des cellules enterrées présentent les dimensions suivantes :
- Epaisseur : 0.4 m
- Hauteur depuis le fond de la cellule :
   - 8 m pour le mur 3a (côté zone de dépose), surmonté de 1 m pour le muret 3a' servant de rambarde à la zone de dépose, et
   - 12m pour les murs 3a-7a' côté opposé à la zone de dépose, soit 8 m pour le mur 3a et 4 m pour le mur 7a'.
- Chaque muret support 11 dispose d'engravures en partie haute pour accueillir les caillebottis 11d permettant la circulation entre les rangées 10b d'UTI sur une surface plane.
   - la pente du fond 4 de la cellule est de 1,5 % avec une double pente convergeant vers le milieu du plancher de la cellule.
   - un caniveau de collecte 11b, visible notamment en figure 4A, en direction d'une grande cuve de rétention déportée 12 enterrée en zone médiane est de 2%.
   - les murs coupe-feu d'enceinte 7a entre la piste de dépose et la chaussée de circulation 6 présentent une épaisseur de 0,4 m et une hauteur de 4 m.
   - les poteaux 9a supportant la toiture 9 et le portique de manutention de stockage 8 présentent une épaisseur de 1 m et une hauteur de 14 m.
   - les murs transversaux coupe-feux d'enceinte 7b ont une épaisseur de 0,4 m et une hauteur de 7m.
   - la hauteur H1 entre l'extrémité supérieure des murs transversaux d'enceintes 7b et la toiture 9 est d'environ 7 m
   - la géométrie du portique de manutention de stockage 8 est :
      - débattement 22.6 m entre la rangée 10b a plus éloignée de la chaussée de circulation 6 et ladite chaussée,
      - une portée de 28,85 m (correspondant à l'entraxe des 2 rails de roulement 8d des seconds chariots 8e),
      - une hauteur maximale dessous le cadre de traction 8c du portique de manutention de stockage 8 de 8,75 m.

Les déplacements du portique de manutention de stockage 8 en charge sont limités car le chauffeur du camion de livraison 6a, après son passage à l'accueil de l'installation, se voit indiquer le repère auquel il doit positionner son ensemble routier sur la chaussée de circulation pour pouvoir récupérer ou déposer son UTI. Ceci permet à l'opérateur 30 informé par l'accueil de la prochaine manutention, de pré-positionner le portique de manutention de stockage 8 en face de la bonne cellule, pendant le laps de temps que le chauffeur met pour arriver depuis l'accueil. Un asservissement de sécurité assure un contrôle permanent de l'altimétrie du bas d'un UTI en cours de manutention par le portique et tout obstacle.

Un positionnement des UTI par GPS et le système de contrôle commande du portique de manutention de stockage 8 disposant d'une cartographie exacte du stockage, permet de connaître de façon très précise les coordonnées X, Y et Z du container et du lieu où positionner le container pour effectuer l'opération de manutention.

Un seul opérateur par poste accueille le chauffeur du camion 6a et réalise les différentes opérations de manutention suivantes :
- acquisition de la « signature RFID » de l'UTI en entrée ou en sortie de l'installation,
- validation du schéma de manutention en relation avec le logiciel de supervision qui optimise la gestion des cellules pleines et des cellules vides en fonction de la nature des produits et des opérations programmées dans la journée et les jours suivants,

- réalisation de l'opération de manutention à partir d'une console portable radio commandant le portique de manutention de stockage 8 et ce, à partir de la zone de dépose 5 auquel il a accès depuis la chaussée de circulation 6 par 3 portes, et
- acquisition si nécessaire de la localisation géographique de l'UTI dans l'installation de stockage.

Bien entendu l'exemple de mise en oeuvre évoqué ci-dessus ne présente aucun caractère limitatif et d'autres améliorations et détails peuvent être apportés a l'installation selon l'invention, sans pour autant sortir du cadre de l'invention où par exemple d'autres configuration et/ou nombres de cellules peuvent être prévus dans l'installation, et où d'autres formes de piste de dépose et/ou de chaussée de circulation et/ou de portique de manutention et/ou de toiture peuvent être envisagées.

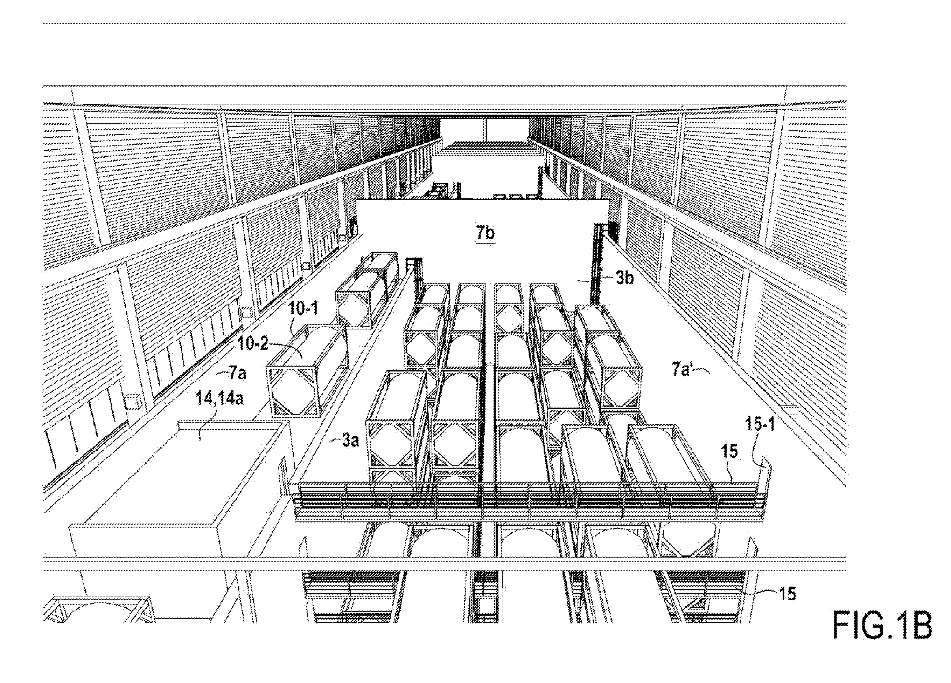

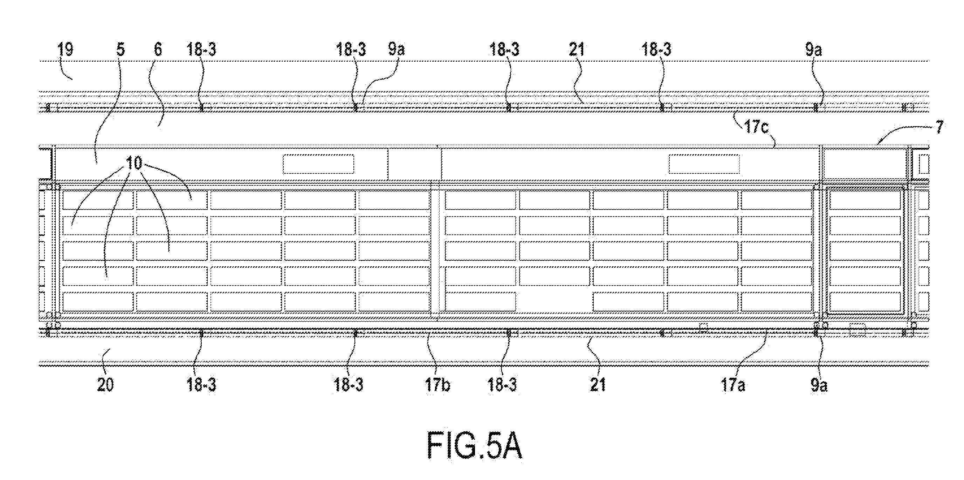

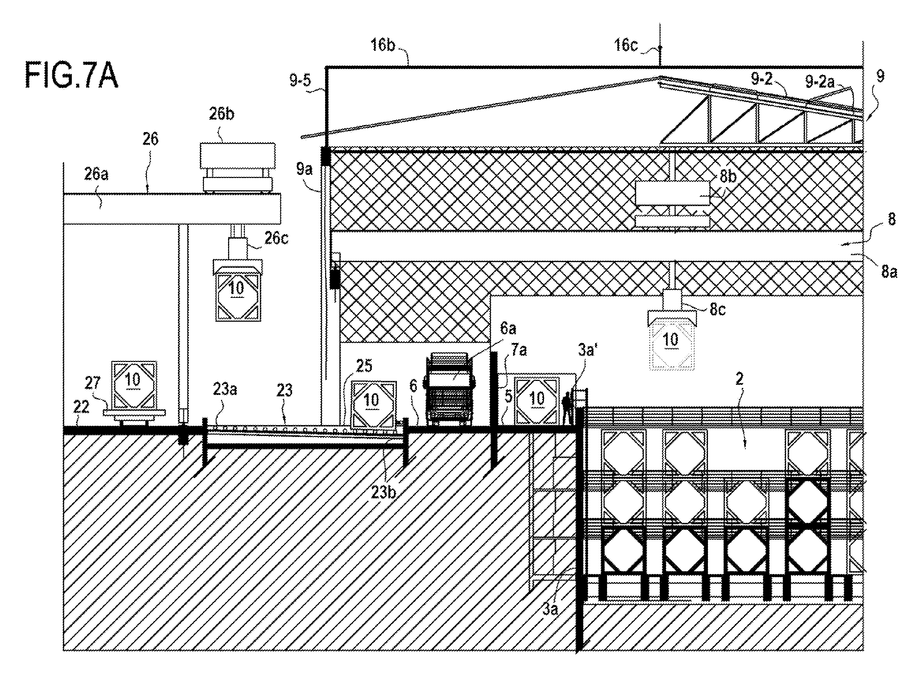

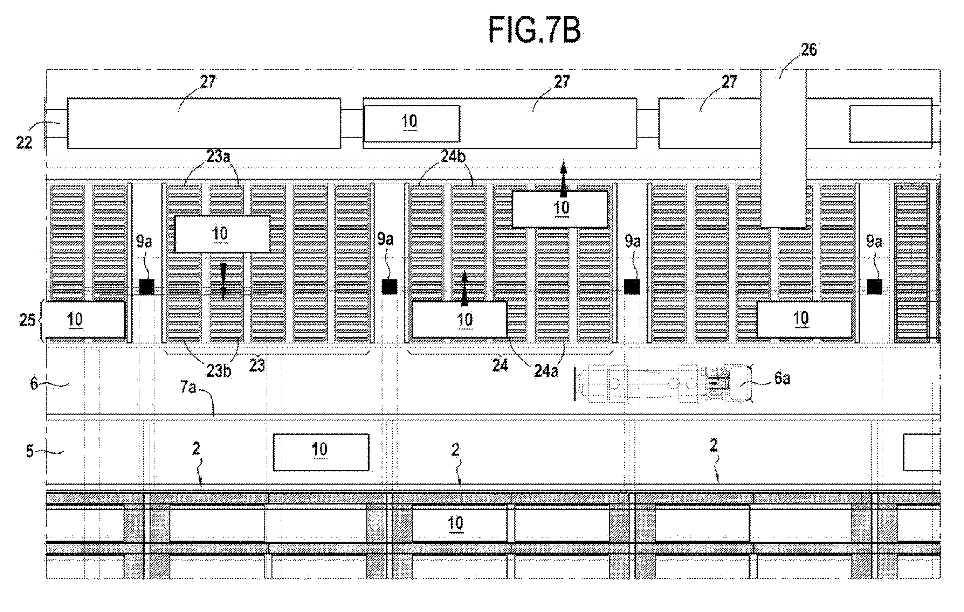

Les figures 7A et 7B représente ainsi une installation selon l'invention perfectionnée par rapport à celle décrite ci-dessus en référence aux figures 1 à 6B, dans laquelle sont prévus au moins une ligne de transport ferroviaire 22 (voire plusieurs lignes de transport ferroviaire) et des dispositifs de convoyage 23, 24 par gravitation entre la ou les lignes de transport ferroviaire 22 et le portique de manutention de stockage 8 et inversement.

Dans le cadre de cette installation perfectionnée, la ligne de transport ferroviaire 22, du type voie ferré, est située à l'extérieur de l'installation du côté de la chaussée de circulation 6. Autrement dit, la ligne de transport ferroviaire 22 est située à l'extérieur de la structure définie en partie par la toiture 9 et les poteaux 9a, de sorte que les dits poteaux 9a sont situés entre la ligne de transport ferroviaire 22 et la chaussée de circulation 6.

Dans cette installation perfectionnée, la clôture 21 et la voie d'accès pompiers 19 (non illustrées sur les figures 7A et 7B) sont déportées ou éloignées vers l'extérieur de l'installation, comparativement à l'installation décrite ci-dessus en référence aux figures 1 à 6B, de manière à laisser la place à la ligne de transport ferroviaire 22 et aux dispositifs de convoyage 23, 24.

La ligne de transport ferroviaire 22 s'étend selon la direction longitudinale XX', parallèlement à la chaussée de circulation 6 et aux cellules 2.

L'installation comprend en outre au moins un portique de manutention extérieur 26 (voire plusieurs portiques de manutention extérieur 26) motorisé de container 10 comportant une poutre 26a, s'étendant dans ladite direction transversale YY' au-dessus de la ligne de transport ferroviaire 22, ladite poutre 26a comprenant des moyens de type rainure ou glissière de guidage d'un chariot 26b, apte à déplacer un container 10, suspendu par un cadre de préhension 26c au dit chariot 26b, horizontalement le long de ladite poutre 26a, dans la direction transversale YY' depuis un wagon 27 circulant sur la ligne de transport ferroviaire 22 jusqu'au-dessus des dispositifs de convoyage 23, 24, puis verticalement jusque sur les dispositifs de convoyage 23, 24.

Les dispositifs de convoyage 23, 24 par gravitation permettent un convoyage des containers 10 entre la ligne de transport ferroviaire 22 et une zone de manutention annexe 25 accessible par le portique de manutention de stockage 8. Cette zone de manutention annexe 25 constitue une zone de dépose et de réception des containers 10 provenant soit de la ligne de transport ferroviaire 22, soit des cellules 2 à destination de la ligne de transport ferroviaire 22.

Cette zone de manutention annexe 25 s'étend le long de la chaussée de circulation 6, parallèlement à la direction longitudinale XX', et est située sous la toiture 9, donc à l'intérieur de la structure définie en partie par la toiture 9 et les poteaux 9a.

Dans cette installation perfectionnée, la poutre 8a du portique de manutention de stockage 8, s'étend dans la direction transversale YY' au-dessus de la chaussée de circulation 6 et également de la zone de manutention annexe 25 ; le premier chariot 8b étant apte à déplacer un container 10, suspendu par le cadre de préhension 8c au dit premier chariot 8b, dans la direction transversale YY' à une hauteur supérieure à celle d'un camion 6a jusqu'au-dessus de la zone de manutention annexe 25 et des dispositifs de convoyage 23, 24, puis verticalement depuis une certaine hauteur jusque sur les dispositifs de convoyage 23, 24. Cette zone de manutention annexe 25 forme ainsi une zone de manutention pour ce portique de manutention de stockage 8.

Les dispositifs de convoyage 23, 24 par gravitation se présentent sous la forme de transporteurs gravitaires à rouleaux comportant respectivement une succession de rouleaux, notamment en acier, mobiles en rotation sur un châssis et définissant une pente par rapport à l'horizontale inférieure à 4 %, telle qu'une pente à 2 %.

Chaque dispositif de convoyage 23, 24 présente :
- une extrémité haute 23a, 24a de dépose des containers 10, sur laquelle les containers 10 sont déposés ; et
- une extrémité basse 23b, 24b de réception des containers 10, sur laquelle les containers 10 sont réceptionnés après avoir suivi naturellement la pente par gravité en glissant sur les rouleaux de l'extrémité haute 23a, 24a jusqu'à l'extrémité basse 23b, 24b.

Il existe deux types de dispositif de convoyage, à savoir :
- un premier dispositif de convoyage 23 dont l'extrémité haute 23a est située du côté de la ligne de transport ferroviaire 22, et dont l'extrémité basse 23b est située du côté de la zone de manutention annexe 25, afin de permettre un convoyage des containers 10 de la ligne de transport ferroviaire 22 (ou plus spécifiquement du portique de manutention extérieur 26) vers la zone de manutention annexe 25 (et donc vers le portique de manutention de stockage 8) pour pouvoir être réceptionné par ledit portique de manutention de stockage 8 et stocké dans la cellule adéquate ; et
- un second dispositif de convoyage 24 dont l'extrémité haute 24a est située du côté de la zone de manutention annexe 25, et dont l'extrémité basse 24b est située du côté de la ligne de transport ferroviaire 22 (ou plus spécifiquement du portique de manutention extérieur 26), afin de permettre un convoyage des containers 10 de la zone de manutention annexe 25 vers la ligne de transport ferroviaire 22.

Ces dispositifs de convoyage 23, 24 s'étendent entre les poteaux 9a de la toiture 9 avec une longueur comprise par exemple entre 9 et 14 mètres. Les premiers dispositifs de convoyage 23 sont identiques aux seconds dispositifs de convoyage 24 à l'exception de leur orientation. Ainsi, les premiers dispositifs de convoyage 23 sont montés tête bêche avec les seconds dispositifs de convoyage 24.

En variante, les dispositifs de convoyage 23 et 24 peuvent être réalisés à partir d'un même type de transporteur gravitaire équipé à ses extrémités de vérins pneumatiques ou hydrauliques permettant de régler leurs pentes respectives et ainsi de réaliser une inversion de pente des dispositifs de convoyage 23, 24 en question.

Comme visible sur la figure 7B, l'installation peut comprendre un ou plusieurs groupes de plusieurs premiers dispositifs de convoyage 23 adjacents et parallèles entre eux, afin de pouvoir convoyer un container 10 sur plusieurs premiers dispositifs de convoyage 23 d'un même groupe. De même, l'installation peut comprendre un ou plusieurs groupes de plusieurs seconds dispositifs de convoyage 23 adjacents et parallèles entre eux.

Ces dispositifs de convoyage 23, 24 permettent ainsi aux containers 10 de passer en deux manutentions du wagon 27 se trouvant sur la ligne de transport ferroviaire 22 jusqu'à la cellule correspondant à sa classe de produit du stockage semi enterré :
- une première manutention : le container 10 est posé par l'un des portiques de manutention extérieur 26 sur l'extrémité haute 23a d'un premier dispositif de convoyage 23 dont la pente l'amène jusqu'à l'extrémité basse 23b et donc la zone de manutention annexe 25 formant zone de manutention du portique de manutention de stockage 8 ; et
- une deuxième manutention : le portique de manutention de stockage 8 prend sur l'extrémité basse 23b du premier dispositif de convoyage 23 et le transporte jusqu'à la cellule 2 appropriée.

Ces dispositifs de convoyage 23, 24 permettent en outre aux containers 10 de passer en deux manutentions de la cellule de stockage semi enterré où se trouve le container 10 en question jusqu'au wagon 27 se trouvant sur la ligne de transport ferroviaire 22 :
- une première manutention : le portique de manutention de stockage 8 récupère le container 10 dans la cellule 2 du stockage enterré et le pose sur l'extrémité haute d'un second dispositif de convoyage 4 dont la pente l'amène jusqu'à l'extrémité basse 24b permettant une réception par le portique de manutention extérieur 26 opérant à l'extérieur de l'installation ; et
- une deuxième manutention : le portique de manutention extérieur 26 reprend le container 10 pour le poser sur le wagon 27 qui doit effectuer l'acheminement du container 10 jusqu'à sa destination finale.

Dans une variante non illustrée, l'installation de stockage est équipé de lignes de transport ferroviaire 22 et de dispositifs de convoyage 23, 24 par gravitation de part et d'autre de chaque cellule 2 afin de permettre des échanges de containers 10 en deux manutentions maximum entre les cellules 2 de stockage semi enterré et des zones de manutention annexe 25 situées de part et d'autre de l'installation de stockage dans sa direction longitudinale XX'.

## Revendications

1. Installation de stockage semi enterrée (1) de matières dangereuses conditionnées en containers (10) comprenant :
- au moins une cellule (2) s'étendant selon une direction longitudinale XX', de préférence au moins trois cellules enterrées (2-1,2-2,2-3) disposées côte à côte dans la direction longitudinale XX', et délimitée par des murs coupe-feu verticaux (3a, 3b) enterrés formant une fosse contenant des dits containers contenant des matières dangereuses de catégories différentes, et
- la ou chaque cellule étant entourée par une enceinte comprenant des murs coupe-feu verticaux (7a-7a', 7b), s'étendant au-dessus du sol, et
- au moins une zone de dépose et de réception (6 ; 25) des containers (10), tel qu'une chaussée de circulation (6) de camions (6a) et/ou une zone de manutention (25) de containers (10) en provenance ou à destination d'une ligne de transport ferroviaire (22), la ou chaque zone de dépose et de réception (6 ; 25) s'étendant dans la dite direction longitudinale XX' à l'extérieur d'un mur longitudinal d'enceinte (7a) sur au moins toute la longueur de la ou des cellules, et
- une piste de dépose en forme de couloir (5) à l'intérieur de chaque dite enceinte s'étendant dans la direction longitudinale XX' entre la ou chaque dite cellule enterrée et ledit mur longitudinal d'enceinte (7a), et
- un portique de manutention motorisée (8) de container apte à déplacer un dit container suspendu (8c), entre la ou chaque zone de dépose et de réception (6 ; 25) et une dite cellule, horizontalement dans une direction transversale YY', à une hauteur supérieure à celle des dits murs d'enceinte (7a-7a'), et verticalement jusqu'au fond de chaque dite cellule, ledit portique étant apte à être déplacé dans la direction longitudinale XX' au-dessus desdits murs d'enceinte.

2. Installation de stockage selon la revendication 1, **caractérisée en ce qu'**il comprend en outre une toiture (9) dont la couverture comprend ou coopère avec des moyens empêchant le passage à travers la toiture d'objets de taille supérieure à 0,1 m², de préférence des objets de taille supérieure à 100 cm² et comportant ou coopérant avec des moyens d'évacuation d'air (9-2) à travers la toiture en cas de surpression en sous-face de la toiture, ladite toiture étant supportée par des poteaux (9a), de préférence extérieurs à l'enceinte, ladite toiture couvrant au moins ladite enceinte (7a-7a',7b) et ledit portique, et de préférence la ou chaque zone de dépose et de réception (6 ; 25), et l'espace entre l'extrémité supérieure des murs d'enceinte (7a,7b) et ladite toiture ne faisant pas obstacle à la circulation d'air entre l'intérieur et l'extérieur de l'installation dans ledit espace.

3. Installation de stockage selon la revendication 2, **caractérisée en ce que** ladite toiture (9) comprend une couverture fermée étanche comprenant des zones, dénommée zone de surpression (9-2) aptes à s'ouvrir en cas de surpression en sous-face de la toiture, ladite toiture comprenant en outre des filets, grillages ou treillis métalliques de toiture (16a,16b) en sous-face de la toiture (16a) et par-dessus la toiture (16b) et/ou par-dessus la toiture (16b), au moins au regard des dites zones de surpression (9-2), de préférence desdits filets, grillages ou treillis métalliques en sous-face de la toiture (16a) recouvrant toute ladite enceinte et des deuxièmes dits filets, grillages ou treillis métalliques au-dessus de ladite toiture (16b) recouvrant toute ladite toiture.

4. Installation selon la revendication 3, **caractérisée en ce que** ladite toiture comporte une charpente en poutres métalliques (9-3) supportant une couverture fermée constituée de panneaux (9-2,9-2a) d'acier et/ou en matériau composite résistant au feu, de préférence des panneaux incorporant un matériau résistant au feu telle que de la laine minérale, certains des dits panneaux, dénommés « panneaux de surpression » (9-2a), étant aptes à s'ouvrir ou à se rompre à partir d'une valeur de surpression donnée entre la sous-face de la toiture et l'extérieur au-dessus de la toiture en regard desdits panneaux de surpression, de préférence les autres panneaux (9-2) de la couverture étant aptes à se désolidariser individuellement de la charpente (9-3) de ladite toiture sur laquelle ils sont montés, à partir d'une valeur de surpression supérieure à ladite valeur seuil de surpression d'ouverture ou rupture des dits panneaux de surpression.

5. Installation de stockage selon l'une des revendications 1 à 4, **caractérisée en ce que** :
- chaque cellule ouverte sur le dessus est délimitée latéralement par quatre murs coupe-feu verticaux enterrés (3a,3b) reposant sur un plancher (4), les quatre murs verticaux comprenant deux murs longitudinaux de cellule (3a) s'étendant parallèlement dans une direction longitudinale XX' et deux murs transversaux de cellule (3b) s'étendant parallèlement dans une direction transversale YY' perpendiculaire à la direction longitudinale YY' entre les deux murs longitudinaux de cellule, et
- chaque dite enceinte comprend quatre murs coupe-feu verticaux (7a-7a', 7b), comprenant deux murs longitudinaux d'enceinte (7a,7a') s'étendant sur une hauteur d'au moins 4 m au-dessus du sol parallèlement dans une direction longitudinale XX' et deux murs transversaux d'enceinte (7b) s'étendant parallèlement dans une direction transversale YY' perpendiculaire à la direction longitudinale XX' entre les deux murs longitudinaux d'enceinte, les deux murs transversaux d'enceinte étant de plus grande hauteur que les murs longitudinaux d'enceinte de préférence d'au moins 7 m de hauteur, et
- la ou chaque zone de dépose et de réception (6 ; 25) s'étend dans la dite direction longitudinale XX' à l'extérieur d'un premier ou des premiers murs longitudinaux d'enceinte (7a) sur au moins toute la longueur de la ou des cellules, et
- ladite piste de dépose en forme de couloir (5) à l'intérieur de chaque dite enceinte s'étendant dans la direction longitudinale XX' entre chaque dite cellule enterrée et ledit mur longitudinal d'enceinte (7a), et
- ledit portique de manutention motorisée (8) de container apte à déplacer un dit container suspendu (8c) audit premier chariot, horizontalement le long de ladite (8a) poutre dans ladite direction transversale YY' à une hauteur supérieure à celle des dits murs d'enceinte longitudinaux (7a-7a'), de préférence à une hauteur inférieure à celle des dits murs d'enceinte transversaux (7b) et verticalement jusqu'au fond d'une dite cellule sur un dit plancher (4), et ladite poutre (8a) coopérant avec des seconds moyens tels sur des rails ou glissière de guidage longitudinaux (8d) et des seconds chariots (8e) aptes à déplacer la dite poutre le long des dits seconds moyens de guidage au-dessus des dits des murs d'enceintes transversaux (7b) dans la direction longitudinale XX'.

6. Installation de stockage selon les revendications 2 et 4, **caractérisée en ce que** ladite toiture (9) est située à une hauteur H1 au dessus de l'extrémité supérieure des dits murs transversaux d'enceinte (7b), H1 devant permettre le déplacement longitudinal dudit portique à vide au dessus des dits murs transversaux et le déplacement transversal d'un dit container suspendu au dit portique au-dessus des dits murs longitudinaux d'enceinte (7a-7a'), mais empêchant le déplacement longitudinal d'un dit container suspendu au dit portique au-dessus des dits murs transversaux (7b).

7. Installation de stockage selon l'une des revendications 1 à 6, **caractérisée en ce qu'**elle comporte plusieurs dites cellules (2,2-1,2-2,2-3) successives à direction longitudinale XX' présentant une même largeur dans ladite direction transversale YY', et deux cellules successives adjacentes présentent un dit mur transversal d'enceinte (7b) de plus grande hauteur en commun, et lesdits murs longitudinaux d'enceinte (7a,7a') des différentes cellules forment de chaque côté un même mur longitudinal d'enceinte continu sur toute la longueur de l'installation, le deuxième mur longitudinal d'enceinte (7a') situé du côté opposé au côté où se trouve ladite piste de dépose (5), s'étend dans la continuité en hauteur des deuxièmes murs longitudinaux enterrés (3a) des cellules, et forment un même mur longitudinal d'enceinte avec celui-ci, et lesdits murs transversaux d'enceinte (7b) s'étendent dans la continuité en hauteur desdits murs transversaux (3b) de cellules et forment un même mur avec ceux-ci.

8. Installation de stockage selon l'une des revendications 1 à 7 **caractérisée en ce que** au moins une dite cellule, de préférence chaque cellule, comporte des moyens de canalisations tels que des pentes et des caniveaux (11b), aptes à diriger des effluents tels que des égouttures ou déchets provenant des dits containers depuis le plancher de fond (4) de la cellule vers une grande cuve de rétention (12) de volume au moins égal à celui d'un container , la dite grande cuve de rétention étant déporté à l'extérieur de la cellule, de préférence enterrée et, de préférence, disposant d'un dispositif automatique d'obturation.

9. Installation de stockage selon l'une des revendications 1 à 8 **caractérisée en ce que** le fond de chaque cellule est partitionné par des murets support (11), de préférence des murets longitudinaux parallèles entre eux, s'élevant au-dessus d'un plancher (4), chaque container en fond de cellule ou dite colonne (10a) de containers reposant sur deux dits murets support (11) délimitant des cuvettes de rétention (11a) dessous le dit container ou colonne de containers, et ledit plancher (4) est légèrement incliné, de préférence incliné à double pente convergeant vers le milieu de la longueur de la cellule où un caniveau transversal en pente (11b) dirige les effluents depuis les dites cuvettes de rétention (11a) vers une grande cuve de rétention (12) à l'extérieur de ladite cellule, de préférence enterrée, de préférence encore disposée à mi longueur de ladite cellule.

10. Installation de stockage selon l'une des revendications 1 à 9 **caractérisé en ce qu'**au moins une dite cellule (2-1, 2-2) comporte au moins une colonne de containers dénommés « container d'effluent » (10d), de préférence deux colonnes de trois containers destinés à recevoir des effluents, lesdits effluents s'étant initialement écoulés depuis des containers pleins de matière dangereuse vers le plancher fond de la cellule, puis vers une grande cuve de rétention (12) déportée à l'extérieur de la cellule (2-1, 2-2), et de préférence **en ce que** les dits containers d'effluents (10d) récupèrent les effluent retenus dans la dite grande cuve de rétention (12) véhiculés dans des canalisations (13a) entre la dite grande cuve de rétention (12) et les dits containers d'effluents (10d) à l'aide de moyens de pompage (13b) installés à l'extérieur de la cellule, de préférence le remplissage du ou des dits containers d'effluents se déclenchant automatiquement lorsque la dite grande cuve de rétention (12) atteint un certain niveau de remplissage.

11. Installation de stockage selon la revendication 10 **caractérisé en ce que** ladite cellule comporte au moins un escalier (14) encloisonné (14a) enterré à l'extérieur de la cellule permettant d'accéder à la hauteur de chaque container d'effluent (10d) d'une colonne de container d'effluent, de préférence par l'intermédiaire de passerelles (15) de visite des containers d'effluents.

12. Installation de stockage selon l'une des revendications 1 à 11 **caractérisé en ce qu'**au moins une cellule (2-3) est partitionnée par des cloisons transversales internes (7-1) de même hauteur que lesdits murs longitudinaux de cellules (3a), de façon à délimiter des sous-cellules (2a) isolées les unes des autres à l'intérieur de ladite cellule.

13. Installation de stockage selon l'une des revendications 1 à 12 en combinaison avec la revendication 2, **caractérisé en ce que** la dite installation comprend des seconds grillages ou filet extérieurs de protection métalliques anti projection (16) s'étendant verticalement depuis des bords (9-1) de la dite toiture jusqu'au dessous de l'extrémité supérieure de dits murs d'enceinte longitudinaux (7a,7a') et dits murs d'enceinte transversaux (7b) et de préférence ne s'étendant pas en dessous de 2 m à partir du niveau du sol de la ou de chaque zone de dépose et de réception (6 ; 25).

14. Installation de stockage selon l'une des revendications 1 à 13 **caractérisé en ce qu'**elle comprend en outre:
- des moyens de détection, notamment par laser (18-1), de fuites de produits contenus dans des containers au niveau du plancher (4) d'une dite cellule (2), et
- des moyens de détection d'incendie et d'explosion (18-2), notamment par infrarouge, à l'intérieur d'une dite cellule et,
- des moyens d'injection d'eau pressurisé sous forme de rideaux d'eau verticaux (17b) en périphérie de ladite cellule et de préférence aussi en fond de cellules (17a) créant un quadrillage de rideaux d'eau verticaux autour de chaque colonne de containers, et de préférence encore des moyens d'injection de mousse anti incendie (17c) en fond de cellule et de préférence sur ladite piste de dépose (5), et
- des dispositifs de mise à la terre de tous les containers ainsi qu'un paratonnerre (16c) assurant la protection contre la foudre de l'installation de stockage.

15. Procédé de stockage de matières dangereuses conditionnées en containers (10) à l'aide d'une installation de stockage selon l'une des revendications 1 à 14, **caractérisé en ce qu'**on réalise les étapes dans lesquelles :
1) on amène un container (10) sur la ou chaque zone de dépose et de réception (6 ; 25) jusqu'au niveau d'une cellule (2) destinée à recevoir la catégorie de matières dangereuses contenue dans les containers (10) à stocker, notamment en déplaçant un camion (6a) de livraison de containers (10) sur la chaussée de circulation (6) ou en déplaçant un wagon (27) de livraison de containers (10) sur la ligne de transport ferroviaire (22) et en convoyant le container (10) depuis le wagon (27) jusqu'à la zone de manutention (25), les containers étant positionnés dans les différentes cellules en fonction de la nature et/ou de la classification en tant que matières dangereuses du produit contenu dans le container,
2) on déplace un dit container (10) depuis la zone de dépose et de réception (6 ; 25) jusqu'à ladite piste de dépose (5) à l'aide d'un dit portique de manutention (8), notamment en déplaçant le container (10) depuis le camion (6a) circulant sur ladite chaussée de circulation (6) ou en déplaçant le container (10) en provenance du wagon (27) depuis la zone de manutention (25), et,
3) on déplace un dit container (10) depuis ladite piste de dépose (5) jusqu'à l'intérieur de ladite cellule à l'aide dudit portique de manutention (8), les containers étant posés sur des murets support (11) en fond de cellule ou au sommet d'une colonne (10a) de containers comprenant un ou deux containers superposés.

## Patentansprüche

1. Halb unterirdische Lagereinrichtung (1) für in Containern (10) verpacktes Gefahrengut, umfassend:
- mindestens eine Zelle (2), die sich in eine Längsrichtung XX' erstreckt, vorzugsweise mindestens drei unterirdische Zellen (2-1, 2-2, 2-3), die nebeneinander in Längsrichtung XX' angeordnet sind, begrenzt durch vertikale unterirdische Feuerschutzwände (3a, 3b), die einen Graben bilden, der die Container mit Gefahrengut unterschiedlicher Kategorien enthält, und
- wobei die oder jede Zelle von einem Raum umgeben ist, umfassend vertikale Feuerschutzwände (7a-7a', 7b), die sich über dem Boden erstrecken, und
- mindestens eine Zone für die Ablage und Aufnahme (6; 25) der Container (10), wie eine Fahrbahn (6) für LKWs (6a) und/oder eine Förderzone (25) für Container (10), die von einer Eisenbahntransportlinie (22) kommen oder für diese bestimmt sind, wobei sich die oder jede Ablage- und Aufnahmezone (6; 25) in Längsrichtung XX' außerhalb einer Längswand (7a) des Raums auf mindestens der gesamten Länge der Zelle(n) erstrecke, und
- eine Ablagespur in Form eines Korridors (5) im Inneren jedes Raums, die sich in Längsrichtung XX' zwischen der oder jeder unterirdischen Zelle und der Längswand (7a) des Raums erstreckt, und
- einen motorbetriebenen Portalkran (8) für Container, der geeignet ist, einen angehängten Container (8c) zwischen der oder jeder Ablage- und Aufnahmezone (6; 25) und einer Zelle horizontal in eine Querrichtung YY' auf einer größeren Höhe als jene der Raumwände (7a-7a') und vertikal bis zum Boden jeder Zelle zu verschieben, wobei der Kran geeignet ist, in Längsrichtung XX' über den Raumwänden verschoben zu werden.

2. Lagereinrichtung nach Anspruch 1, **dadurch gekennzeichnet, dass** sie ferner ein Dach (9) umfasst, dessen Abdeckung Mittel umfasst oder mit Mitteln zusammenwirkt, die den Durchgang von Gegenständen mit einer Größe über 0,1 m², vorzugsweise von Gegenständen mit einer Größe über 100 cm² durch das Dach verhindern, und Mittel umfasst oder mit Mitteln zusammenwirkt (9-2), die Luft durch das Dach im Falle eines Überdrucks an der Unterseite des Daches ableiten, wobei das Dach von Trägern (9a), die sich vorzugsweise außerhalb des Raums befinden, getragen wird, wobei das Dach mindestens den Raum (7a-7a', 7b) und den Kran und vorzugsweise die oder jede Ablage- und Aufnahmezone (6; 25) und den Raum zwischen dem oberen Ende der Raumwände (7a, 7b) abdeckt, und wobei das Dach für die Luftzirkulation zwischen dem Innenbereich und dem Außenbereich der Anlage in dem Raum kein Hindernis darstellt.

3. Lagereinrichtung nach Anspruch 2, **dadurch gekennzeichnet, dass** das Dach (9) eine dicht verschlossene Abdeckung besitzt, umfassend Zonen, Überdruckzonen (9-2) genannt, die geeignet sind, sich im Falle eines Überdrucks an der Unterseite des Daches zu öffnen, wobei das Dach ferner Netze, Gitter oder metallische Dachgeflechte (16a, 16b) an der Unterseite des Daches (16a) und über dem Dach (16b) und/oder über dem Dach (16b), zumindest gegenüber den Überdruckzonen (9-2), vorzugsweise Netze, Gitter oder Metallgeflechte an der Unterseite des Daches (16a), die den gesamten Raum abdecken, und zweite Netze, Gitter oder Metallgeflechte über dem Dach (16b), die das gesamte Dach abdecken, umfasst.

4. Einrichtung nach Anspruch 3, **dadurch gekennzeichnet, dass** das Dach ein Gerüst aus Metallträgern (9-3) umfasst, das eine geschlossene Abdeckung aus Platten (9-2, 9-2a) aus Stahl und/oder aus einem feuerbeständigen Verbundmaterial trägt, vorzugsweise Platten, die ein feuerbeständiges Material, wie Mineralwolle, einschließt, wobei gewisse der Platten, "Überdruckplatten" (9-2a) genannt, geeignet sind, sich ab einem gegebenen Überdruckwert zwischen der Unterseite des Daches und dem Außenbereich über dem Dach gegenüber den Überdruckplatten zu öffnen oder zu brechen, wobei vorzugsweise die anderen Platten (9-2) der Abdeckung geeignet sind, sich einzeln von dem Gerüst (9-3) des Daches, aus dem sie montiert sind, ab einem Überdruckwert größer als der Überdruckgrenzwert für das Öffnen oder Brechen der Überdruckplatten zu lösen.

5. Lagereinrichtung nach einem der Ansprüche 1 bis 4, **dadurch gekennzeichnet, dass**:
- jede oben offene Zelle seitlich durch vier unterirdische vertikale Feuerschutzwände (3a, 3b) begrenzt ist, die auf einem Boden (4) stehen, wobei die vier vertikalen Wände zwei Längszellwände (3a), die sich parallel in eine Längsrichtung XX' erstrecken, und zwei Zellquerwände (3b) umfassen, die sich parallel in eine Querrichtung YY' senkrecht auf die Längsrichtung YY' zwischen den beiden Zelllängswänden erstrecken, und
- jeder Raum vier vertikale Feuerschutzwände (7a-7a', 7b) besitzt, umfassend zwei Raumlängswände (7a, 7a'), die sich auf einer Höhe von mindestens 4 m über dem Boden parallel in eine Längsrichtung XX' erstrecken, und zwei Raumquerwände (7b), die sich parallel in eine Querrichtung YY' senkrecht auf die Längsrichtung XX' zwischen den beiden Raumlängswänden erstrecken, wobei die beiden Raumquerwände von größerer Höhe sind als die Raumlängswände, vorzugsweise von mindestens 7 m Höhe, und
- sich die oder jede Ablage- und Aufnahmezone (6; 25) in die Längsrichtung XX' außerhalb einer ersten oder von ersten Raumlängswänden (7a) auf mindestens der gesamten Länge der Zelle(n) erstreckt, und
- sich die Ablagespur in Form eines Korridors (5) im Inneren jedes Raums in die Längsrichtung XX' zwischen jeder unterirdischen Zelle und der Raumlängswand (7a) erstreckt, und
- der motorbetriebene Förderkran (8) für Container geeignet ist, einen angehängten Container (8c) zum ersten Schlitten horizontal entlang des Trägers (8a) in Querrichtung YY' auf einer größeren Höhe als jene der Raumlängswände (7a-7a'), vorzugsweise auf einer geringeren Höhe als jene der Raumquerwände (7b) und vertikal bis zum Boden einer Zelle auf einem Aufstellboden (4) zu verschieben, wobei der Träger (8a) mit zweiten derartigen Mitteln auf Schienen oder einer Längsführungsgleitschiene (8d) und zweiten Schlitten (8e) zusammenwirkt, die geeignet sind, den Träger entlang der zweiten Führungsmittel über den Raumquerwänden (7b) in Längsrichtung XX' zu verschieben.

6. Lagereinrichtung nach den Ansprüchen 2 und 4, **dadurch gekennzeichnet, dass** das Dach (9) auf einer Höhe H1 über dem oberen Ende der Raumquerwände (7b) angeordnet ist, wobei H1 die Längsverschiebung des Krans im Leerzustand über den Querwänden und die Querverschiebung eines am Kran angehängten Containers über den Raumlängswänden (7a-7a') ermöglichen, aber die Längsverschiebung eines am Kran angehängten Containers über den Querwänden (7b) verhindern muss.

7. Lagereinrichtung nach einem der Ansprüche 1 bis 6, **dadurch gekennzeichnet, dass** sie mehrere aufeinanderfolgende Zellen (2, 2-1, 2-2, 2-3) in Längsrichtung XX', die eine selbe Breite in Querrichtung YY' aufweisen, und zwei aneinandergrenzende aufeinanderfolgende Zellen umfasst, die eine Raumquerwand (7b) von gemeinsam größerer Höhe aufweisen, wobei die Raumlängswände (7a, 7a') der verschiedenen Zellen auf jeder Seite eine selbe durchgehende Raumlängswand auf der gesamten Länge der Einrichtung bilden, wobei sich die zweite Raumlängswand (7a'), die auf der Seite gegenüber der Seite, auf der sich die Ablagespur (5) befindet, angeordnet ist, im Höhenverlauf der zweiten unterirdischen Längswände (3a) der Zellen erstreckt und eine selbe Raumlängswand mit diesen bildet, und wobei sich die Raumquerwände (7b) im Höhenverlauf der Zellquerwände (3b) erstrecken und eine selbe Wand mit diesen bilden.

8. Lagereinrichtung nach einem der Ansprüche 1 bis 7, **dadurch gekennzeichnet, dass** mindestens eine Zelle, vorzugsweise jede Zelle, Kanalisationsmittel, wie Gefälle und Rinnen (11 b), umfasst, die geeignet sind, die Abflüsse, wie Leckagen oder Abfälle, die von den Containern von der Bodenwand (4) der Zelle zu einer großen Auffangwanne (12) mit einem Volumen mindestens gleich jenem eines Containers kommen, zu lenken, wobei die große Auffangwanne außerhalb der Zelle, vorzugsweise unterirdisch angeordnet ist und vorzugsweise über eine automatische Verschlussvorrichtung verfügt.

9. Lagereinrichtung nach einem der Ansprüche 1 bis 8, **dadurch gekennzeichnet, dass** der Boden jeder Zelle durch Stützmauern (11), vorzugsweise zueinander parallele Längswände, unterteilt ist, die über einen Aufstellboden (4) aufragen, wobei jeder Container am Boden einer Zelle oder jede so genannte Containersäule (10a) auf zwei Stützmauern (11) steht, die Auffangbecken (11a) unter dem Container oder der Containersäule begrenzen, und wobei der Aufstellboden (4) leicht geneigt ist, vorzugsweise mit einem doppelten Gefälle, das zur Mitte der Länge der Zelle konvergierend ist, wo eine Querrinne mit einem Gefälle (11 b) die Ausflüsse von den Auffangbecken (11a) zu einer großen Auffangwanne (12) außerhalb der Zelle lenkt, die vorzugsweise unterirdisch ist und ferner vorzugsweise auf halber Länge der Zelle angeordnet ist.

10. Lagereinrichtung nach einem der Ansprüche 1 bis 9, **dadurch gekennzeichnet, dass** mindestens eine Zelle (2-1, 2-2) mindestens eine Containersäule mit der Bezeichnung "Ausflusscontainer" (10d), vorzugsweise zwei Säulen von drei Containern, die dazu bestimmt sind, Abflüsse aufzunehmen, umfasst, wobei die Ausflüsse zuerst von den mit Gefahrengut vollen Containern zum Aufstellboden der Zelle geflossen sind, dann zu einer großen Auffangwanne (12), die außerhalb der Zelle (2-1, 2-2) angeordnet ist, und vorzugsweise dadurch, dass die Ausflusscontainer (10d) die in der großen Auffangwanne (12) zurückgehaltenen Ausflüsse, die in den Kanalisationen (13a) zwischen der großen Auffangwanne (12) und den Ausflusscontainern (10d) mit Hilfe von Pumpmitteln (13b), die außerhalb der Zelle angeordnet sind, befördert werden, wiedergewinnen, wenn die große Auffangwanne (12) einen gewissen Füllstand erreicht.

11. Lagereinrichtung nach Anspruch 10, **dadurch gekennzeichnet, dass** die Zelle mindestens eine unterirdische geschlossene (14a) Treppe (14) außerhalb der Zelle umfasst, die es ermöglicht, Zugang zu der Höhe jedes Ausflusscontainers (10d) einer Ausflusscontainersäule zu erhalten, vorzugsweise mit Hilfe von Besichtigungsbrücken (15) der Ausflusscontainer.

12. Lagereinrichtung nach einem der Ansprüche 1 bis 11, **dadurch gekennzeichnet, dass** mindestens eine Zelle (2-3) durch Innenquerwände (7-1) derselben Höhe wie die Zelllängswände (3a) unterteilt ist, um voneinander isolierte Unterzellen (2a) innerhalb der Zelle zu begrenzen.

13. Lagereinrichtung nach einem der Ansprüche 1 bis 12 in Kombination mit Anspruch 2, **dadurch gekennzeichnet, dass** die Einrichtung zweite äußere metallische Spritzschutzgitter oder -netze (16) umfasst, die sich vertikal von den Rändern (9-1) des Daches bis zu der Unterseite des oberen Endes der Raumlängswände (7a, 7a') und der Raumquerwände (7b) erstrecken und sich vorzugsweise nicht unter 2 m über dem Niveau des Bodens der oder jeder Ablage- und Aufnahmezone (6; 25) erstrecken.

14. Lagereinrichtung nach einem der Ansprüche 1 bis 13, **dadurch gekennzeichnet, dass** sie ferner umfasst:
- Mittel zur Erfassung, insbesondere durch Laser (18-1), von Leckagen von in den Containern enthaltenen Produkten im Bereich des Bodens (4) einer Zelle (2), und
- Mittel zur Erfassung eines Brande oder einer Explosion (18-2), insbesondere durch Infrarot, im Inneren einer Zelle, und
- Mittel zum Einspritzen von Wasser unter Druck in Form von vertikalen Wasservorhängen (17b) an der Peripherie der Zelle und vorzugsweise auch am Zellenboden (17a), die einen Raster von vertikalen Wasservorhängen um jede Containersäule erzeugen, und ferner auch Mittel zum Einspritzen von Löschschaum (17c) auf den Zellenboden und vorzugsweise auf die Ablagespur (5), und
- Vorrichtungen zum Erden aller Container sowie einen Blitzableiter (16c), der den Schutz der Lagereinrichtung gegen Blitzschlag gewährleistet.

15. Verfahren zur Lagerung von in Containern (10) verpacktem Gefahrengut mit Hilfe einer Lagereinrichtung nach einem der Ansprüche 1 bis 14, **dadurch gekennzeichnet, dass** die folgenden Schritte durchgeführt werden, bei denen:
1) ein Container (10) auf die oder jede Ablage- und Aufnahmezone (6; 25) bis auf das Niveau einer Zelle (2) gebracht wird, die dazu bestimmt ist, die Gefahrengutkategorie, die in den zu lagernden Behältern (10) enthalten ist, aufzunehmen, wobei insbesondere ein LKW (6a) zur Lieferung von Containern (10) auf dem Fahrweg (6) oder ein Waggon (27) zur Lieferung von Containern (10) auf der Eisenbahntransportlinie (22) verschoben und der Container (10) vom Waggon (27) bis zur Förderzone (25) befördert wird, wobei die Container in den verschiedenen Zellen in Abhängigkeit von der Natur und/oder der Klassifizierung als Gefahrengut des in dem Container enthaltenen Produktes positioniert werden,
2) ein Container (10) von der Ablage- und Aufnahmezone (6; 25) bis zur Ablagespur (5) mit Hilfe eines Förderkrans (8) verschoben wird, wobei insbesondere der Container (10) vom LKW (6a), der auf dem Fahrweg (6) fährt, verschoben wird, oder wobei der Container (10), der vom Waggon (27) kommt, von der Förderzone (25) aus verschoben wird, und
3) ein Container (10) von der Ablagespur (5) bis in das Innere der Zelle mit Hilfe des Förderkrans (8) verschoben wird, wobei die Container auf Stützmauern (11) am Zellenboden oder an der Spitze einer Containersäule (10a), umfassend einen oder zwei übereinander angeordnete Container, gestellt werden.

## Claims

1. Semi-buried storage facility (1) for hazardous materials packaged in containers (10) comprising:
- at least one cell (2) extending in a longitudinal direction XX', preferably at least three buried cells (2-1, 2-2, 2-3) arranged side by side in the longitudinal direction XX', and delimited by buried vertical firewalls (3a, 3b) forming a pit containing the said containers containing hazardous materials of different categories, and
- the or each cell being surrounded by a chamber comprising vertical firewalls (7a-7a', 7b) extending above the ground, and
- at least one depositing and receiving area (6; 25) for containers (10) such as a roadway (6) for trucks (6a) and/or a handling area (25) for containers (10) arriving from or destined for a rail transport line (22), the or each depositing and receiving area (6; 25) extending in the said longitudinal direction XX' outside a longitudinal chamber wall (7a) over at least the entire length of the cell or cells, and
- a corridor-shaped depositing strip (5) inside each said chamber extending in the longitudinal direction XX' between the or each said buried cell and the said longitudinal chamber wall (7a), and
- a motor-driven container handling gantry (8) capable of moving a said suspended container (8c) between the or each depositing and receiving area (6; 25) and a said cell, horizontally in a transverse direction YY' at a height greater than the height of the said chamber walls (7a-7a') then vertically down to the bottom of each said cell, the said gantry being capable of being moved in the longitudinal direction XX' above the said chamber walls.

2. The storage facility according to claim 1, **characterized in that** it further comprises roofing (9) whose cladding comprises or cooperates with means preventing the passing through the roofing of objects of size greater than 0.1 m², preferably objects of size greater than 100 cm², and comprising or cooperating with means (9-2) for evacuating air through the roofing in the event of overpressure on the underside of the roofing, the said roofing being supported by posts (9a), preferably outside the chamber, the said roofing covering at least the said chamber (7a-7a', 7b) and the said gantry and preferably the or each depositing and receiving area (6;25), and the space between the upper end of the chamber walls (7a, 7b) and the said roofing not impeding the circulation of air between the inside and outside of the facility in the said space.

3. The storage facility according to claim 2, **characterized in that** the said roofing (9) comprises a closed weatherproof cladding comprising regions called overpressure regions (9-2) capable of opening in the event of overpressure on the underside of the roofing, the said roofing further comprising roof wire nets, mesh or grating (16a, 16b) on the underside of the roofing (16a) and above the roofing (16b) and/or above the roofing (16b) at least opposite the said overpressure regions (9-2), preferably the said wire netting, mesh or grating on the underside of the roofing (16a) covering the entire said chamber, and said second wire netting, mesh or grating above the said roofing (16b) covering the entire said roofing.

4. The installation according to claim 3, **characterized in that** the said roofing comprises a metal beam framework (9-3) supporting a closed cladding formed of panels (9-2, 9-2a) in steel and/or fireproof composite material, preferably panels incorporating a fire resistant material such as mineral wool, some of said panels called "pressure relief panels" (9-2a) being capable of opening or rupturing on and after a given overpressure value between the underside of the roofing and the outside above the roofing opposite said pressure relief panels, preferably the other panels (9-2) of the cladding being capable of detaching individually from the framework (9-3) of said roofing on which they are mounted on and after an overpressure value greater than said overpressure threshold value at which said pressure relief panels open or rupture.

5. The storage facility according to one of claims 1 to 4, **characterized in that**:
- each cell open on the topside is laterally delimited by four buried, vertical firewalls (3a, 3b) resting on a floor (4), the four vertical walls comprising two longitudinal cell calls (3a) extending parallel in a longitudinal direction XX' and two transverse cell walls (3b) extending parallel in a transverse direction YY' perpendicular to the longitudinal direction YY' between the two longitudinal cell walls, and
- each said chamber comprises four vertical firewalls (7a-7a', 7b) comprising two longitudinal chamber walls (7a, 7a') extending over a height of at least 4 m above the ground parallel in a longitudinal direction XX' and two transverse chamber walls (7b) extending parallel in a transverse direction YY' perpendicular to the longitudinal direction XX' between the two longitudinal chamber walls, the two transverse chamber walls being of greater height than the longitudinal chamber walls preferably a height of at least 7 m, and
- the or each depositing and receiving area (6; 25) extends in the said longitudinal direction XX' outside a first or first longitudinal chamber wall(s) (7a) over at least the entire length of the cell(s), and
- the said corridor-shaped depositing strip (5) inside each said chamber extending in the longitudinal direction XX' between each said buried cell and the said longitudinal chamber wall (7a), and
- the said motor-driven container handling gantry (8) capable of moving a said container, hung (8c) from the said first carriage, horizontally along the said beam (8a) in the said transverse direction YY' at a height greater than the height of the said longitudinal chamber walls (7a-7a'), preferably at a height lower than the height of the said transverse chamber walls (7b), then vertically down to the bottom of a said cell onto a said floor (4), and the said beam (8a) cooperating with second means such as on longitudinal-guiding rails or slides (8d) and with second carriages (8e) capable of moving the said beam along the said second guiding means above the said transverse chamber walls (7b) in the longitudinal direction XX'.

6. The storage facility according to claims 2 and 4, **characterized in that** the said roofing (9) is positioned at a height HI above the upper end of the said transverse chamber walls (7b), HI having to allow the longitudinal movement of the said unloaded gantry above the said transverse walls and the transverse movement of a said container hung from the said gantry above the said longitudinal chamber walls (7a-7a') but preventing the longitudinal movement of a said container hung from the said gantry above the said transverse walls (7b).

7. The storage facility according to one of claims 1 to 6, **characterized in that** it comprises several said cells (2, 2-1, 2-2, 2-3) successively in the longitudinal direction XX' having one same width in the said transverse direction YY', and two adjacent successive cells have in common a said transverse chamber wall (7b) of greater height, and the said longitudinal chamber walls (7a,7a') of the different cells form on each side one same longitudinal chamber wall continuous over the entire length of the facility, the second longitudinal chamber wall (7a') located on the side opposite the side of the said depositing strip (5) extends in the height-wise continuity of the second buried longitudinal cell walls (3a) and forms one same longitudinal chamber wall therewith, and the said transverse chamber walls (7b) extend in the height-wise continuity of the said transverse cell walls (3b)and form one same wall therewith.

8. The storage facility according to one of claims 1 to 7 **characterized in that** at least one said cell, preferably each cell, comprises channelling means such as slopes and drainage channels (11b) capable of directing effluent, such as drippings or waste originating from the said containers, from the said bottom floor (4) of the cell towards a large retention tank (12) of volume at least equal to that of a container, the said large retention tank being offset outside the cell, preferably buried and preferably provided with an automatic shut-off device.

9. The storage facility according to one of claims 1 to 8 **characterized in that** the bottom of each cell is partitioned by supporting dwarf walls (11) preferably longitudinal, parallel dwarf walls rising above a floor (4), each container at the bottom of a cell or said stack (10a) of containers resting on two said supporting dwarf walls (11) delimiting effluent containments (11a) underneath the said container or stack of containers, and the said floor (4) is slightly sloped preferably with a double slope converging towards the middle of the length of the cell where a transverse sloped drainage channel (11b) directs the effluent from the said containments (11a) towards a large retention tank (12) outside the said cell, preferably buried and further preferably arranged at mid-length of the said cell.

10. The storage facility according to one of claims 1 to 9 **characterized in that** at least one said cell (2-1, 2-2) comprises at least one stack of containers called "effluent containers" (10d) preferably two stacks of three containers intended to receive effluent, the said effluent having initially escaped from containers filled with hazardous material towards the bottom floor of the cell, then towards a large retention tank (12) offset outside the cell (2-1, 2-2), and preferably **in that** the said effluent containers (10d) collect the effluent retained in the said large retention tank (12) conveyed via channels (13a) between the said large retention tank (12) and the said effluent containers (10d) pumped by pumping means (13b) installed outside the cell, preferably the filling of the said effluent container(s) being triggered automatically when the said large retention tank (12) is filled to a certain level.

11. The storage facility according to claim 10, **characterized in that** the said cell comprises at least one enclosed stairway (14a) buried outside the cell providing access to the height of each effluent container (10d) of a stack of effluent containers, preferably via footbridges (15) for inspection of the effluent containers.

12. The storage facility according to one of claims 1 to 11, **characterized in that** at least one cell (2-3) is partitioned by inner transverse partitions (7-1) of same height as the said longitudinal cell walls (3a), so as to delimit sub-cells (2a) isolated from each other inside the said cell.

13. The storage facility according to one of claims 1 to 12 in combination with claim 2, **characterized in that** the said facility comprises second outside wire mesh or netting (16) protecting against flying debris and extending vertically from the edges (9-1) of the said roofing as far as below the upper end of said longitudinal chamber walls (7a,7a') and said transverse chamber walls (7b), and preferably not extending to more than 2 m below the level of the ground of the or of each depositing and receiving area (6; 25).

14. The storage facility according to one of claims 1 to 13 **characterized in that** it further comprises:
- detection means, notably laser means (18-1) to detect leaks of products contained in the containers onto the floor (4) of a said cell (2), and
- fire and explosion detection means (18-2) notably infrared means, inside a said cell, and
- means for injecting pressurized water in the form of vertical curtains of water (17b) on the periphery of the said cell and also preferably at the bottom of the cell (17a) creating a surround of vertical water curtains around each stack of containers, and also preferably means for injecting fire-fighting foam (17c) into the bottom of the cell and preferably on the said depositing strip (5), and
- devices to ground all the containers, as well as a lightning conductor (16c) ensuring protection of the storage facility against lightning strikes.

15. A method for storing hazardous materials packaged in containers (10) using a storage facility according to one of claims 1 to 14, **characterized in that** the following steps are conducted:
1) a container (10) is brought to the or each depositing and receiving area (6; 25) as far as the level of a cell (2) intended to receive the category of hazardous materials contained in the container (10) to be stored, in particular by moving a truck (6a) delivering containers (10) along the roadway (6), or by moving a wagon (27) delivering containers (10) on the rail transport line (22) and conveying the container (10) from the wagon (27) to the handling area (25), the containers being placed in the different cells in relation to the type and/or class of hazardous material of the product contained in the container,
2) a said container (10) is moved from the depositing and receiving area (6; 25) to the depositing strip (5) by means of a said handling gantry (8), in particular by moving the container (10) from the truck (6a) travelling on the said roadway (6) or by moving the container (10) originating from the wagon (27) from the handling area (25), and
3) a said container (10) is moved from the said depositing strip (5) to inside the said cell by means of the said handling gantry (8), the containers being deposited on supporting dwarf walls (11) at the bottom of the cell or on top of a column (10a) of containers comprising one or two stacked containers.
